# EUROPEAN PATENT SPECIFICATION

(11) **EP 3 254 815 B1**
(45) Date of publication and mention of the grant of the patent: **09.01.2019**
(21) Application number: 16397519.6
(22) Date of filing: 06.06.2016
(51) Int. Cl.: B27G 11/00, B32B 21/04, B05C 1/02, B05C 1/08, B05C 9/04, B32B 21/13, B27D 1/04

(54) **A METHOD FOR APPLYING ADHESIVE ON AT LEAST A FIRST WOODEN VENEER USING A ROLL COATER AND A ROLL COATER**
VERFAHREN ZUM AUFTRAGEN VON KLEBSTOFF AUF MINDESTENS EINEM ERSTEN HOLZFURNIER MIT EINER ROLLRAKELVORRICHTUNG UND ROLLRAKELVORRICHTUNG
PROCÉDÉ PERMETTANT D'APPLIQUER UN ADHÉSIF SUR AU MOINS UN PREMIER PLACAGE EN BOIS À L'AIDE D'UN ROULEAU ENDUCTEUR ET UN TEL ROULEAU

(43) Date of publication of application: 13.12.2017
(73) Proprietor: UPM Plywood Oy, 15140 Lahti (FI)
(72) Inventor: KAUTONEN, Pekka, 57230 SAVONLINNA (FI); BACKMAN, Jouko, 57230 SAVONLINNA (FI)
(74) Representative: Berggren Oy, Tampere

(56) References cited:
- LU-A1- 42 125
- US-A- 2 326 429
- US-A1- 2013 291 792

## Description

### Technical field

The invention relates method for applying adhesive onto wooden veneers. The method relates in particular to a method for manufacturing plywood. The invention relates also to a roll coater for applying adhesive onto wooden veneers. The roll coater may be a part of a system for manufacturing plywood.

### Background

Plywood is manufactured by stacking wooden veneers onto each other, arranging adhesive in between the wooden veneers, and hot-pressing the stack of veneers to cure the adhesive and form a plywood panel. Subsequently, the edges of the panel may be finished e.g. by sawing, as known in the prior art.

There are two ways of applying adhesive onto the veneers. In a method, adhesive is poured onto only one side of a wooden veneer. In this method, adhesive is applied to all the veneers, except for a top layer. In another method, a roll coater is used to apply adhesive on two opposite sides of a veneer. In this method, adhesive is applied only to every second veneer layer, because those veneers that have adhesive, have adhesive on both sides. The present invention relates to the latter method.

A roll coater suitable for the application of glue or the like onto a surface is disclosed in the patent US 2,326,429. As indicated therein, the rate of glue delivery from the roll surfaces to the surface being treated will depend largely on the clearance established by the setting of the doctor roll towards or from the corresponding main roll. In this connection, the patent discloses accurate adjustment of this setting at each end of each pair of rolls. The patent application US2013/0291792 discloses a method and device for applying material on both sides of a veneer by using application rollers. Also the patent LU42125 discloses a device suitable for applying material on both sides of a web by using application rollers.

Adhesive is generally applied onto two sides using a roll coater. Such a roll coater comprises an application roll and a doctor roll on both sides of the veneer. The application roll applies adhesive onto a surface of veneer. It is known to adjust the amount of adhesive to be applied by changing the width of a feeding gap in between the application roll and the doctor roll. Typically, the width of the gap can be adjusted at each end of the pair of rolls irrespective of the width of the gap at the other end.

Such a method for adjusting the amount of adhesive to be applied has several drawbacks. First, often some adhesive becomes cured onto the means for changing the width of the feeding gap. Therefore, the means for changing the width of the feeding gap do not function in a reliable manner. For example, if an operator tries to reduce the width of the gap, e.g. by moving a wedge defining the width, it is possible that the wedge moves, but the axis of rotation of the doctor roll does not move, because it is stuck by the adhesive. In the alternative, it is possible that some adhesive becomes adhered onto the wedge, whereby its movement increases the width of the feeding gap excessively, or the wedge cannot be moved because of the adhesive.

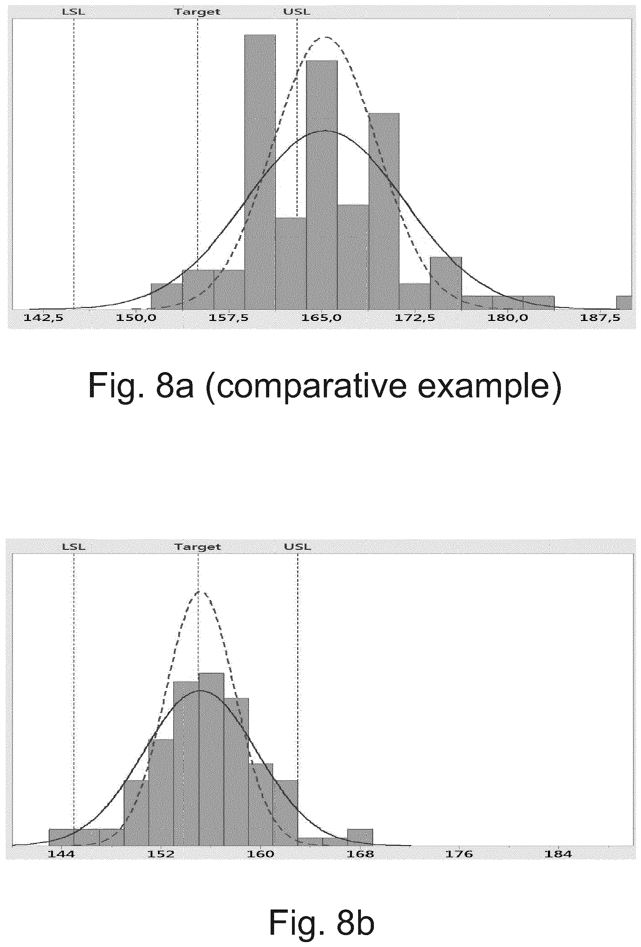

Such a malfunction can be found only after using the means for changing the width of the feeding gap. When the situation is repaired, e.g. by cleaning the means from the adhesive, the width is not properly adjusted, e.g. because the wedge is located at a wrong location. This has several disadvantages on the process economy. For example, the adhesive becomes applied in a nonuniform manner. Thus, too much adhesive may be applied at one end of the feeding gap, while too little is applied at the other end. This situation is difficult to detect visually, especially when the adhesive is clear (i.e. transparent). Thus, such a situation may last for a long time until it becomes noticed. An operator may observe, that there is too little adhesive on some locations and increase the amount in a uniform manner, which will result in too much adhesive being applied (see Fig. 8a). Moreover, in such a case, the application roll(s) wear in an uneven manner, whereby the need for maintenance increases. Such maintenance may include turning the application roll and/or applying a new coating onto the application roll. Still further, typically the rolls comprise, at their ends, flanges for preventing the adhesive from flowing elsewhere than the feeding gap. In case the width of the feeding gap is uneven, also these flanges wear more rapidly than in other cases.

### Summary

A new method for controlling the amount of applied adhesive has been found. In essence, it has been found that the amount of the applied adhesive can be controlled, to a certain extent, by adjusting the peripheral speed of the doctor roll relative to the peripheral speed of the application roll. To certain extent, the amount can be adjusted without adjusting the width of the feeding gap. However, for larger variations it may be necessary to also adjust the width of the feeding gap. It is should be noted, that when veneers of same kind and thickness and adhesive of same kind is used, it typically suffices to adjust only the speeds without adjusting the width of the gap. By reducing the need for adjustments of the width of feeding gap, the problems of prior are overcome at least to some extent.

The method according to the invention is disclosed in independent claim 1. A corresponding roll coater according to the invention is disclosed in independent claim 8. Preferable embodiments are disclosed in the dependent claims.

### Brief description of the drawings

- Fig. 1a: shows, in a side view, a roll coater 500 and a wooden veneer 101 being coated with adhesive 330 using the roll coater 500,
- Fig. 1b: shows, in a side view, a roll coater 500 and a wooden veneer 101a being coated with adhesive 330 using the roll coater 500 at a first time t1,
- Fig. 1c: shows, in a side view, a roll coater 500 and a wooden veneer 101b being coated with adhesive 330 using the roll coater 500 at a second time t2,
- Fig. 1d: shows, in a principal view, grains of a wooden veneer, their orientation within the veneer, and the direction of feeding the wooden veneer through the application gap,
- Fig. 2: shows, in an end view, the roll coater of Fig. 1a,
- Fig. 3: shows, in more detail and in a side view, a part of a roll coater 500,
- Fig. 4a: shows, in an end view, a primary application roll 210 and recessions 215, 216 on its surface,
- Fig. 4b: shows, in an end view, a primary doctor roll 220,
- Fig. 4c: shows, in an end view, a part of a primary application roll 210 and its recessions 215, 216 in more detail,
- Fig. 5a: shows, in a top view, a part of the roll coater having a wide primary feeding gap g₁,
- Fig. 5b: shows, in a top view, a part of the roll coater having a narrow primary feeding gap g₁,
- Fig. 6: shows schematically a first arrangement for manufacturing a wood laminate panel 100, such as a plywood panel,
- Fig. 7: shows schematically a second arrangement for manufacturing a wood laminate panel 100, such as a plywood panel,
- Fig. 8a: shows variation of the amount of adhesive, when the amount is controlled only by the width of the feeding gap, and
- Fig. 8b: shows variation of the amount of adhesive, when the amount is controlled only by the rotation speed of the doctor roll.

### Detailed description

As indicated in the background, plywood panels are made by applying adhesive onto at least some of the veneers. A typical adhesive comprises water, whereby a wooden veneer, onto which adhesive is applied, may wet. It has been found that when the adhesive is unevenly applied, the veneer may wet unevenly. It has been found that, upon subsequent drying, such uneven application of adhesive may result in bending or curving of the plywood panel. Moreover, it has been found that such bending problems are reduced when the adhesive is evenly applied onto the surface(s) of the veneers. The authors suppose, that this is a result of moisture induced swelling. When an uneven amount of adhesive is applied, some parts of the veneers swell more than other parts. After forming the panel by hot-pressing, the moisture within the panel will settle, resulting in effect, contraction at the points were most swelling occurred. In this way, an even application of adhesive will produce more planar plywood panels. The embodiments of the invention also improve the evenness of the applied adhesive layer, because in the method, the width of the feeding gap(s) need not to be adjusted, whereby the sufficient evenness will remain, even if the amount of the applied adhesive is changed.

Moreover, when the adhesive is evenly applied on to the surface(s) of the veneer, the total amount of adhesive can be reduced. This is because the amount of adhesive must, in general, be adjusted so such a high level, that the whole surface of the veneer(s) will be coated by the adhesive. Thus, in case of uneven adhesive layer, the amount of adhesive needs to be adjusted based on the location wherein the adhesive layer is thinnest. When the adhesive layer is even, the overall consumption is reduced.

The method and roll coater 500 as discussed below will also improve the evenness of the adhesive layer, since the ends of the doctor roll need not, in general, to be adjusted separately.

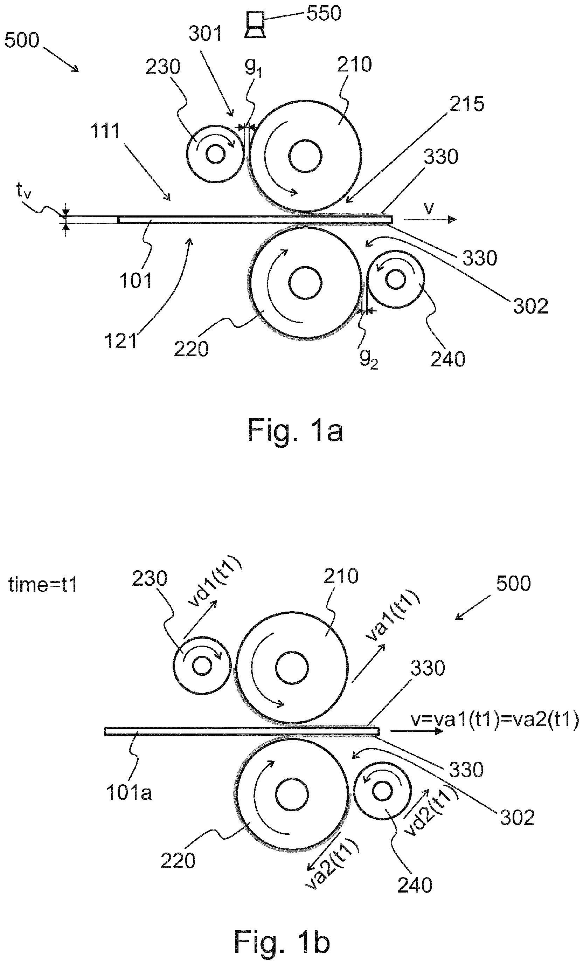

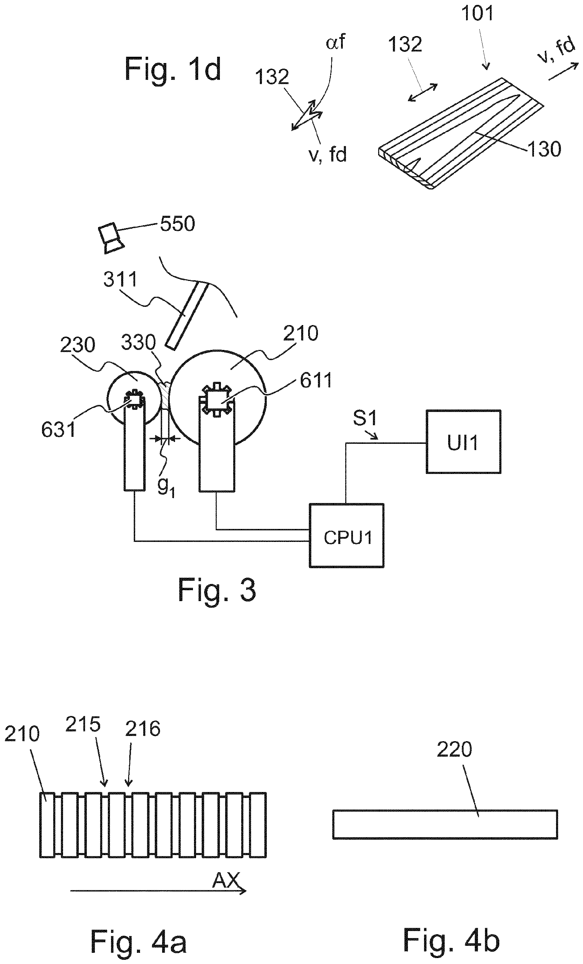

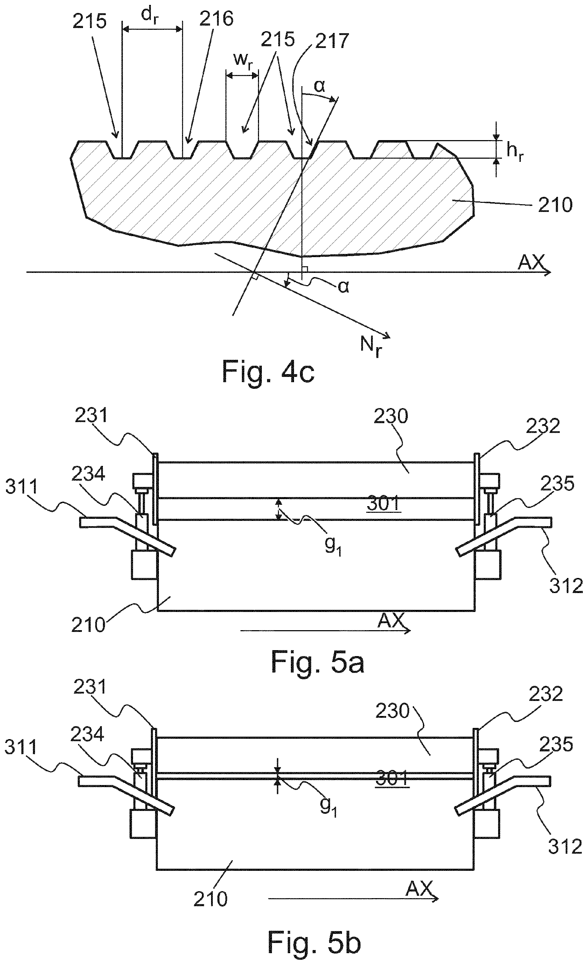

Fig. 1a shows a roll coater 500. In the figure, the roll coater 500 is coating a wooden veneer 101, i.e. a first wooden veneer 101, with adhesive 330. The roll coater 500 comprises a primary application roll 210 and a secondary application roll 220. The secondary application roll 220 is substantially parallel to the primary application roll 210. Thus, the axes of rotation of the primary application roll 210 (reference AX denotes the axis of rotation, Fig. 4a and 4c) and the secondary application roll 220 are substantially parallel. The axes of rotation are substantially parallel in the meaning that the axes of rotation are parallel or an angle of less than 2 degrees is formed in between the axes of rotation.

In this way, an application gap 215 is left in between the primary application roll 210 and the secondary application roll 220. In Fig. 1a a part of the wooden veneer 101 is arranged in the application gap 215. The application gap 215 is commonly referred to also as a nip. As the application rolls 210 and 220 rotate, the wooden veneer 101 moves through the nip 215, typically without sliding relative to the primary application roll 210 and the secondary application roll 220. Correspondingly, the application rolls 210 and 220 draw the veneer 101 through the nip 215. Thus, in the method, the peripheral speed of the primary application roll 210 equals the peripheral speed of the secondary application roll 220. Moreover, the peripheral speed of the primary application roll 210 equals the speed v of the veneer 101. Furthermore, as indicated in Fig. 1a by the arrows indicating direction of rotation, the direction of angular speed of rotation of primary application roll 210 is opposite to the direction of angular speed of rotation of the secondary application roll 220. In this way, the adhesive 330 becomes applied onto both surfaces 111 and 121 of the wooden veneer 101 via the application rolls 210, 220.

To control the amount of adhesive 330 applied onto a primary surface 111 (i.e. the upper side in Fig. 1a) of the wooden veneer 101, the roll coater 500 comprises a primary doctor roll 230 substantially parallel to the primary application roll 210. Thus, the axes of rotation of the primary application roll 210 and the primary doctor roll 230 are substantially parallel. The axes of rotation are substantially parallel in the meaning that the axes of rotation are parallel or an angle of less than 2 degrees is formed in between the axes of rotation. Moreover, the primary doctor roll 230 is arranged in close proximity with the primary application roll 210, whereby a primary feeding gap g₁ is left in between the primary doctor roll 230 and the primary application roll 210. The term "close proximity" refers to sufficiently narrow primary feeding gap g₁. A width of the primary feeding gap may be e.g. at most 0.2 mm, such as from 0.05 mm to 0.2 mm. Herein the width of the primary feeding gap g₁ is left in a direction perpendicular to the axis of rotation AX (Figs. 4a and 4c) of the primary application roll 210. Correspondingly, the length of the primary feeding gap is parallel to the axis of rotation AX of the primary application roll 210.

To control the amount of adhesive 330 applied onto a secondary surface 121 (i.e. the lower side in Fig. 1a) of the wooden veneer 101, the roll coater 500 comprises a secondary doctor roll 240 substantially parallel to the secondary application roll 220. Thus, the axes of rotation of the secondary application roll 220 and the secondary doctor roll 240 are substantially parallel. The axes of rotation are substantially parallel in the meaning that the axes of rotation are parallel or an angle of less than 2 degrees is formed in between the axes of rotation. Moreover, the secondary doctor roll 240 is arranged in close proximity with the secondary application roll 220, whereby a secondary feeding gap g₂ is left in between the secondary doctor roll 240 and the secondary application roll 220. The term "close proximity" refers to sufficiently narrow secondary feeding gap g₂. A width of the secondary feeding gap g₂ may be e.g. at most 0.2 mm, such as from 0.05 mm to 0.2 mm. Herein the width of the secondary feeding gap g₂ is left in a direction perpendicular to the axis of rotation of the secondary application roll 220. Correspondingly, the length of the secondary feeding gap is parallel to the axis of rotation of the secondary application roll 220.

Adhesive 330 is fed onto the primary application roll 210 through the primary feeding gap g₁. Correspondingly, the in the roll coater 500, the primary application roll 210 and the primary doctor roll 230, in combination, define a primary space 301 for receiving adhesive 330. Adhesive 330 is fed to the primary space 301 with suitable means 311, 312 for feeding the adhesive into primary space 301; the means 311, 312 being comprised by the roll coater 500. The means 311, 312 may comprise e.g. a pipeline through which adhesive is fed to the primary space 301. The means 311, 312 may further comprise a pump configured to supply adhesive to the primary space 301.

Adhesive 330 is fed onto the secondary application roll 220 through the secondary feeding gap g₂. Correspondingly, the in the roll coater 500, the secondary application roll 220 and the secondary doctor roll 240, in combination, define a secondary space 302 for receiving adhesive 330. Adhesive 330 is fed to the secondary space 302 with suitable means 321, 322 for feeding the adhesive into secondary space 302; the means 321, 322 being comprised by the roll coater 500. The means 321, 322 may comprise e.g. a pipeline through which adhesive is fed to the secondary space 302. The means 321, 322 may further comprise a pump configured to supply adhesive to the secondary space 302.

Referring to Figs. 5a and 5b, flanges 231, 232 are arranged at the ends of the primary doctor roll. Similar flanges are arranged at the ends of the secondary doctor roll 240. The purpose of these flanges 231, 232 is to prevent the adhesive 330 from flowing out of the space 301 from the ends of the rolls 210 and 230; or 220 and 240. These flanges may be arranged so close to an end of an application roll, that the flow of adhesive in the axial direction is prevented. Correspondingly, the flanges 231, 232 are arranged to guide the adhesive only to the primary feeding gap g₁; and the other flanges (of the secondary doctor roll, not shown) to the are arranged to guide the adhesive 330 only to the secondary feeding gap g₂. Referring to Figs 5a and 5b, typically the flanges 231, 232 are fit to the ends of the application roll 210 such that the adhesive will not flow between the flange and the closer end of the application roll 210. Note that in fig 5a, the adhesive does not flow in between the flange 231 and a first end (i.e. the left end in the figure) of the primary application roll 210; and the adhesive does not flow in between the flange 232 and the other end (i.e. the right end in the figure) of the primary application roll 210. A flange 231, 232 of a doctor roll 230 and an end of the primary application roll 210 are arranged so close to each other, that the flow of the adhesive 330 in the axial direction AX is prevented.

In addition, the roll coater 500 may comprise a sensor 550 (Fig. 1a) configured to sense the amount of adhesive the primary space 301. The roll coater 500 may comprise a sensor configured to sense the amount of adhesive the secondary space 302 (not shown). Referring to Fig. 3, as an example, the sensor 550 may be an optical sensor configured to measure the height of the surface of the adhesive 330 in the primary space 301. Another similar sensor may be configured to measure the height of the surface of the adhesive 330 in the secondary space 302. A control unit (e.g. CPU1 or CPU2) may be arranged to control a pump, by using a signal received from such a sensor 550, such that when the signal is indicative of a low amount of adhesive 330 in the primary space 301, the pump pumps some adhesive 330 into the primary space 301. The pump may pump e.g. a predetermined amount of adhesive 330, or the pump may be engaged, until the amount of adhesive 330 in the primary space 301 reaches a limiting value. These principles apply to the secondary space 302, and feeding adhesive thereto, *mutatis mutandis.*

Moreover, the roll coater 500 comprises means 611, such as a first primary motor 611, for rotating the primary application roll 210 (Fig. 3). The roll coater 500 comprises means 631, such as a second primary motor 631, for rotating the primary doctor roll 230. The roll coater 500 comprises means, such as a first secondary motor, for rotating the secondary application roll 220. The roll coater comprises means, such as a second secondary motor, for rotating the secondary doctor roll 240. The motors are preferably electrical motors. The means are configured in such a way that the primary doctor roll 230 can be rotated independently of the primary application roll 210. The means are configured in such a way that the secondary doctor roll 240 can be rotated independently of the secondary application roll 220. Correspondingly, in a method, the primary doctor roll 230 is rotated independently of the primary application roll 210. In a method, the secondary doctor roll 240 is rotated independently of the secondary application roll 220. Preferably each one of the primary doctor roll 230 and the primary application roll 210 are controlled using an electrical control means CPU1, 611, 631 capable of controlling the rotation of each one of the two rolls 210, 230 independently of the other roll. Moreover, preferably each one of the secondary doctor roll and the secondary application roll are controlled using an electrical control means capable of controlling the rotation of each one of the two rolls independently of the other roll. However, as indicated elsewhere, typically the peripheral rotation speed of the primary application roll 210 equals the peripheral rotation speed of the secondary application roll 220.

It has been surprisingly found that the rotation speed of the periphery of the doctor roll 230, 240 relative to the rotation speed of the periphery of the corresponding application roll (210, 220, respectively) affects the amount of adhesive 330 applied onto the wooden veneer 101. It has also been found that, as a result, the amount of adhesive 330 applied onto the wooden veneer 101 can be controlled by controlling the ratio vd/va of the doctor roll speed vd to the application roll speed va, wherein the roll speeds refer to the peripheral speed of the corresponding roll, the unit of which is distance per time, e.g. m/s (not to be confused with an angular speed with a unit of e.g. rad/s). Naturally, the same principle applies to both primary rolls (doctor roll 230 and application roll 210) and secondary rolls (doctor roll 240 and application roll 220). For brevity, the invention is explained only for the primary rolls 210, 230.

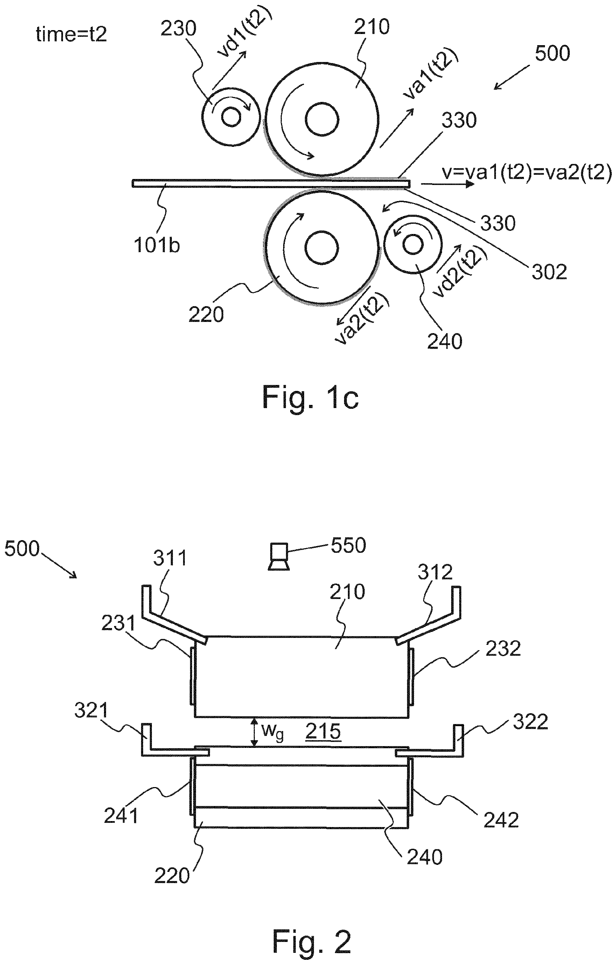

As a result of such control, in an embodiment of the method, the amount of adhesive 330 applied onto veneers is changed by changing the roll speed vd of the doctor roll relative to the roll speed va of the application roll. Referring to Fig. 1b, in a corresponding method, at a first instance of time t1, [a1] the primary application roll 210 is rotated with a first application roll speed va1(t1) equalling the peripheral speed of the primary application roll 210 at the first instance of time t1 and [b1] the primary doctor roll 230 is rotated with a first doctor roll speed vd1(t1) equalling the peripheral speed of the primary doctor roll 230 at the first instance of time t1. Moreover, referring to Fig. 1c, at a second instance of time t2, [a2] the primary application roll 210 is rotated with a second application roll speed va1(t2) equalling the peripheral speed of the primary application roll 210 at the second instance of time and [b2] the primary doctor roll 230 is rotated with a second doctor roll speed vd1(t2) equalling the peripheral speed of the primary doctor roll 230 at the second instance of time t2. As is evident, the second instance of time t2 is different from the first instance of time t1. Moreover, as the roll speed is controlled (or roll speeds are controlled), the ratio (vd1(t1)/va1(t1)) of the first doctor roll speed vd1(t1) to the first application roll speed va1(t1) is different from the ratio (vd1(t2)/va1(t2)) of the second doctor roll speed vd1(t2) to the second application roll speed va1(t2). In other terms, vd1(t1)/va1(t1) ≠ vd1(t2)/va1(t2). The process of applying adhesive is herein understood to mean that va1(t1)≠0 and va1(t2)≠0, whereby the ratio has a well-defined value. Moreover, preferably also vd1(t1)≠0 and vd1(t2)≠0.

As indicated in Figs. 1b and 1c, preferably the secondary application roll 220 is rotated with the same peripheral speed as the primary application roll 210, i.e. va2(t1)=va1(t1) and va2(t2)=va1(t2). Moreover, to apply the same process on both sides of the veneer 101, 101a, 101b, it is possible that the peripheral speed of the secondary doctor roll 240 equals the peripheral speed of the primary doctor roll 230. However, since there may be some deviation in the width of the feeding gaps g₁ and g₂, it is possible that the peripheral speed of the secondary doctor roll 240 is different from the peripheral speed of the primary doctor roll 230. The corresponding peripheral speeds of the secondary doctor roll 240 are indicated by vd2(t1) and vd2(t2) in Figs. 1b and 1c.

To clarify the method, adhesive 330 is applied onto the first wooden veneer 101 during a first period of time T1 that does not necessarily comprise either of the first time t1 or the second time t2. Preferably, the first period of time T1 comprises at least one of the first time t1 and the second time t2. More preferably, the first period of time T1 comprises only one of the first time t1 and the second time t2. Moreover, adhesive 330 is applied onto another wooden veneer during a second period of time T2 that does not necessarily comprise either of the first time t1 or the second time t2. Preferably, the second period of time T2 comprises only one of the first time t1 and the second time t2, i.e. the other one, which is not comprised by the first period of time T1.

As indicated above, multiple veneers will be coated by the method subsequently. Preferably, the adjustment of the rotation speed(s) is made in between applying adhesive to the first wooden veneer and applying adhesive onto another wooden veneer. In other words, preferably, the rotation speed(s) is/are not changed while applying adhesive on a wooden veneer, but at a point of time in between application of adhesive to two subsequent wooden veneers. Thus, a veneer is coated using the first ratio of rotation speeds (vd1(t1)/va1(t1)) and another veneer is coated using the second ratio of rotation speeds (vd1(t2)/va1(t2)).

The corresponding method feature is reflected in the roll coater 500 by the roll coater 500 having a control unit CPU1. The control unit CPU1 is configured, at a first instance of time t1, [a1] to rotate the primary application roll 210 with a first application roll speed va1(t1) equalling the peripheral speed of the primary application roll 210 at the first instance of time t1 and [b1] to rotate the primary doctor roll 230 with a first doctor roll speed vd1(t1) equalling the peripheral speed of the primary doctor roll 230 at the first instance of time t1. As evident, in order to rotate the rolls 210, 230, in the aforementioned manner, the control unit CPU1 is configured to control the means 611, 631, respectively.

Moreover, the control unit CPU1 is configured, after the first instance of time t1, to receive a signal S1 indicative of a need for changing the amount of adhesive to be applied (see Fig. 3). For example, the operator of the roll coater 500 may provide the control unit CPU1 with such a signal S1 through a user interface UI1, when the operator realizes that the amount of adhesive 330 needs to be changed. The control unit CPU1 is configured, in response to the signal S1, change the rotation speed of at least one of the primary doctor roll 230 and the primary application roll 210. Preferably, the control unit CPU1 is configured, in response to the signal S1, change the rotation speed of only the primary doctor roll 230. Thus, at a second instance of time t2, which is after the first instance of time t1, the control unit CPU1 is configured to [a2] to rotate the primary application roll 210 with a second application roll speed va1(t2) equalling the peripheral speed of the primary application roll 210 at the second instance of time t2 and [b2] rotate the primary doctor roll 230 with a second doctor roll speed vd1(t2) equalling the peripheral speed of the primary doctor roll 230 at the second instance of time t2. The control unit CPU1 is configured to rotate the roll(s) in such a way that the ratio (vd1(t1)/va1(t1)) of the first doctor roll speed vd1(t1) to the first application roll speed va1(t1) is different from the ratio (vd1(t2)/va1(t2)) of the second doctor roll speed vd1(t2) to the second application roll speed va1(t2). In other terms, vd1(t1)/va1(t1) ≠ vd1(t2)/va1(t2). Thus, the control unit CPU1 is configured to control the means 611 for rotating the primary application roll 210 and/or the means 631 for rotating the primary doctor roll 230 in such a way that aforementioned difference in the ratio vd1(t1)/va1(t1) compared to vd1 (t2)/va1(t2) takes place.

As indicated in the figures by the arrows indicating the direction of rotation, in an embodiment, the primary doctor roll 230 and the primary application roll 210 are rotated in such a way that that, at a proximity of the primary feeding gap g₁, the periphery of the primary doctor roll 230 moves in the same direction as the periphery of the primary application roll 210. Thus, the aforementioned speeds vd1(t1) and va1(t1) are directed, at the primary feeding gap g₁, in the same direction (typically downwards). Correspondingly, in such an embodiment, the direction of angular speed of rotation (having the unit rad/s) of primary application roll 210 is opposite to the direction of angular speed of rotation of primary doctor roll 230. In an embodiment, the ratio of the first doctor roll speed vd1(t1) to the first application roll speed va1(t1), vd1(t1)/va1(t1), is from 10 % to 30 %. It is noted, that within this range, by increasing the ratio, the amount of adhesive 330 applied onto the primary surface 111 of the veneer 101 increases.

Correspondingly, in an embodiment of the roll coater 500, the control unit CPU1 is configured to rotate the primary doctor roll 230 and the primary application roll 210 in such a way that that, at a proximity of the primary feeding gap g₁, the periphery of the primary doctor roll 230 moves in the same direction as the periphery of the primary application roll 210 and the ratio vd1(t1)/va1(t1) of the first doctor roll speed vd1(t1) to the first application roll speed va1(t1) is from 10 % to 30 %. More preferable, the control unit is configured to rotate the primary application roll 210 with an application roll speed va from 100 m/s to 200 m/s, and rotate the primary doctor roll with at least five or at least ten different doctor roll speeds vd from the range 10 % to 30 % of the application roll speed va. It has been found that by changing the ratio (vd/va) of the doctor roll speed vd to the application roll speed va e.g. from 10 % to 30 %, in a typical plywood process, the amount of adhesive applied on a surface 111, 121 of the wooden veneer 101 will increase by about 20 g/m².

The ratio of the doctor roll speed to the application roll speed may be adjusted by a reasonable amount. Thus, in an embodiment, the ratio (vd1(t1)/va1(t1)) of the of the first doctor roll speed vd1(t1) to the first application roll speed va1(t1) has a first value r1=vd1(t1)/va1(t1) and the ratio (vd1(t2)/va1(t2)) of the second doctor roll speed vd1(t2) to the second application roll speed va1(t2) has a second value r2=vd1(t2)/va1(t2). The difference between the second value r2 and the first value r1 may be e.g. at least 3 percentage units, such as from 3 to 20 percentage units. The difference may be e.g. at least 5 percentage units, from 5 to 15 percentage units, at least 8 percentage units, or from 8 to 10 percentage units. As indicated above, both the values r1 and r2 may be given in percentages, whereby the unit of their difference may be percentage units. For example, the first value r1=vd1(t1)/va1(t1) may be about 20 %, corresponding to the centre of the of the aforementioned range 10 % to 30 %. By said adjusting, the second value r2=vd1(t2)/va1(t2) may at least 3 percentage units smaller (i.e. at most 17%) or at least 3 percentage units larger (i.e. at least 23 %). The amount of adhesive 330 applied onto a surface 111 of the veneer 101 would be smaller for the value 17 % than for the value 20 % or 23 %. Correspondingly, the amount of adhesive 330 applied onto the surface 111 of the veneer 101 would be larger for the value 23 % than for the value 20 % or 17 %.

Correspondingly, in an embodiment of the roll coater 500, the control unit CPU1 is configured to rotate the primary doctor roll 230 and the primary application roll 210 in such a way that the ratio (vd1(t1)/va1(t1)) of the of the first doctor roll speed vd1(t1) to the first application roll speed va1(t1) has a first value r1 and the ratio (vd1(t2)/va1(t2)) of the of the second doctor roll speed vd1(t2) to the second application roll speed va1(t2) has a second value r2, wherein the difference between the second value r2 and the first value r1 is at least 3 percentage units, preferably at least 5 or at least 8 percentage units; such as from 3 to 20, 5 to 15, or 8 to 10 percentage units, as indicated above.

In an embodiment, the aforementioned ratio is decreased in such a way that the second value r2=vd1(t2)/va1(t2) is smaller than the first value r1=vd1(t1)/va1(t1), and the amount of adhesive applied to onto a wooden veneer is, at the second instance of time t2, less than the amount of adhesive applied to onto a wooden veneer at the instance of first time t1. In an embodiment, the aforementioned ratio is decreased in such a way that the second value r2=vd1(t2)/va1(t2) is greater than the first value r1=vd1(t1)/va1(t1), and the amount of adhesive applied to onto a wooden veneer is, at the second instance of time t2, more than the amount of adhesive applied to onto a wooden veneer at the instance of first time t1. In an embodiment, the aforementioned ratio is decreased in such a way that the second value r2=vd1(t2)/va1(t2) is at least three percentage units smaller than the first value r1=vd1(t1)/va1(t1), and the amount of adhesive applied to onto a wooden veneer is, at the second instance of time t2, at least 2 g/m² less than the amount of adhesive applied to onto a wooden veneer at the first time instance of t1. In an embodiment, the aforementioned ratio is increased in such a way that the second value r2=vd1(t2)/va1(t2) is at least three percentage units larger than the first value r1=vd1(t1)/va1(t1), and the amount of adhesive applied to onto a wooden veneer is, at the second instance of time t2, at least 2 g/m² more than the amount of adhesive applied to onto a wooden veneer at the first instance of time t1.

In an embodiment, at least the first doctor roll speed is changed in order to change the amount of adhesive applied. Thus, in an embodiment, vd1(t1) is different from vd1(t2). In an embodiment, the ratio vd1(t1)/vd1(t2) may be less than 0.97 or more than 1.03. In an embodiment, the peripheral speed of the primary application roll is may the same at the aforementioned two instances of time, i.e. va1(t1)=va1(t2). In an embodiment, the peripheral speed of the primary application roll is substantially constant throughout the process. Herein the term substantially constant means a deviation of at most 10 % relative to the average value; wherein the average refers to the time average.

The method and the roll coater 500 have been discussed only in relation to the primary doctor roll 230 and primary application roll 210. As indicated above, in an embodiment the peripheral speed of the primary application roll 210 equals the peripheral speed of the secondary application roll 220. Moreover, as is evident, the amount of adhesive applied onto the secondary surface 121 of the wooden veneer 101 by the secondary application roll 220 can be controlled by adjusting the speed(s) of the secondary application roll 220 and/or the secondary doctor roll 240 *mutatis mutandis.* Thus, at the secondary feeding gap g₂, the direction of the periphery of the secondary doctor roll 240 is parallel to the direction of the periphery of secondary application roll 220. Moreover, the ratio of the peripheral speed(s) of at least one of the secondary doctor roll and secondary application roll may be varied e.g. in the range from 10 % to 30 %.

The method has been found to work very well for wooden veneers 101. This is most likely due to the fact that a wooded veneer 101 is slightly compressible. Therefore, the width w_{g} (Fig. 2) of the application gap 215 can be made slightly smaller than the thickness tᵥ (Fig. 1a) of the wooden veneer 101, in order improve the application of the adhesive 330. In an embodiment, before application of the adhesive 330, the first wooden veneer 101 has a thickness tᵥ and the width w_{g} of the application gap in the direction of the thickness tᵥ is from 0.05 mm to 0.5 mm less than the thickness tᵥ. The embodiment comprises feeding the first wooden veneer 101 through the application gap 215 without the application rolls 210, 220 sliding relative to the first wooden veneer 101. Thus, the embodiment comprises feeding the first wooden veneer 101 through the application gap 215 with a velocity v that equals the peripheral speed of the primary application roll 210 and the secondary application roll 220. It is also noted that the direction of the velocity v of the veneer is parallel to the direction of the speed of the periphery of the primary application roll 210 at the application gap 215. In a preferred embodiment, the thickness of the first wooden veneer is from 1 mm to 4 mm; more preferably from 1 mm to 3 mm. The aforementioned value of the difference between the width w_{g} of the application gap 215 and the thickness tᵥ of the first wooden veneer 101 has been found to work well at least for these thicknesses. Correspondingly, in an embodiment of the roll coater 500, the width w_{g} of the application gap 215 is at most 4 mm; preferably at most 3 mm.

It is further noted, that also in other embodiments, the first wooden veneer 101 can be fed through the application gap 215 with a velocity v that equals the peripheral speed of the primary application roll 210 and the secondary application roll 220 (i.e. v=va1(t1)=va2(t1)); and the direction of the velocity v of the veneer is parallel to the direction of the speed of the periphery of the primary application roll 210 at the application gap 215. As is implicit, the velocity v of the veneer may be a function of time, and may be indicated by v(t), because the speed(s) of the application rolls 210, 220, i.e. the speeds va1(t1), va1(t2), va2(t1), va2(t2), may also be a function of time.

The method can be applied, not only to change the amount of adhesive 330 to be applied, but to keep the amount of adhesive 330 constant in case the viscosity of the adhesive 330 changes during the process of applying adhesive.

In particular, the method has been found to result in an even layer of adhesive, when the veneer is driven through the nip 215 in a direction that is substantially parallel to the grain direction of the veneer. The term substantially parallel here means parallel or a direction that forms an angle αf of at most 15 degrees with the grain direction. The angle αf is herein defined for un-oriented directions, i.e. the angle αf refers to the smaller of the two angles defined by two different orientations, as indicated in Fig. 1d. As indicated in Fig. 1d, a wooden veneer 101 (or 101a or 101b) comprises grains 130 oriented in a grain direction 132. Moreover, as indicated in the figure the grain direction 132 is parallel to the direction of the velocity v by which the veneer 101 is driven through the application gap 215 (see Figs. 1a, 1b, and 1c). Thus, in an embodiment of the method, the wooden veneer 101 is fed through the application gap 215 into a feeding direction fd (see Fig. 1d). As is evident, the feeding direction is parallel to the velocity v into which the wooden veneer moves during application of adhesive. As is evident, the feeding direction fd is thus parallel to the roll speed va1(t1) at the nip 215. Moreover, the feeding direction fd is substantially parallel to the grain direction 132; substantially parallel in the aforementioned meaning.

The method has been found particularly suitable for applying conventional plywood adhesives onto a single wooden veneer 101 at a time in the manufacture of plywood. Thus, at least one of the following parameters A to D concerns the embodiment of the method. More precisely, the parameters are combinable, and the more parameters of the combination are present, the better the method for applying adhesive seems to work.
(A) The viscosity of the adhesive 330. The viscosity of the adhesive 330 is preferably from 15 s to 45 s as measured in a standard Ford Cup test at a temperature that is in the range from 20 °C to 25 °C, such as at 23 °C or at 25 °C. In an embodiment, the aforementioned values refer to the temperature 23 °C. The Ford Cup test is described in the standard ISO 2431 (1993-02-15). The aforementioned values relate to the orifice size of 6 mm of the flow cup. In an embodiment, the aforementioned values relate to the orifice size of 6 mm of the flow cup in the test, wherein the temperature is 23 °C. In an embodiment, the aforementioned values relate to the orifice size of 6 mm of the flow cup in the test, wherein the temperature is 25 °C. This ensures that the adhesive will be applied reasonably well onto the primary application roll. Preferably the viscosity of the adhesive is from 20 s to 40 s as measured according to the aforementioned test in the aforementioned conditions. Moreover, preferably, the method is carried out at a temperature from 10 °C to 35 °C, preferably from 15 °C to 30 °C, to ensure that the viscosity of the adhesive is suitable also in the process conditions.
(B) The first application roll speed va, va1(t1), va1(t2). The peripheral speed of the first application roll 210 (as denoted above by va, va1(t1) and/or va1(t2)) is preferably from 50 m/s to 500 m/s. Preferably, the peripheral speed of the first application roll 210 (e.g. va1(t1) and/or va1(t2)) is from 100 m/s to 250 m/s. As indicated above, preferably the peripheral speed of the second application roll 220 equals the peripheral speed of the first application roll 210.
(C) The amount of adhesive 330 applied onto the surfaces 111, 121 of the veneer. Preferably, from 120 g/m² to 200 g/m² of adhesive is applied, by the primary application roll, onto the primary surface 111 of the wooden veneer 101. An even more suitable range is from 140 g/m² to 175 g/m² of adhesive. Preferably, as much adhesive 330 is applied, by the secondary application roll 220, onto the secondary surface 121 of the wooden veneer 101. Typical dry matter contents of the adhesive are discussed below.
(D) Type of adhesive. Preferably, the adhesive comprises at least one of phenolic resin, phenol-formaldehyde, urea-melamine, melamine formaldehyde, resorcinol, and a lignin-based adhesive. Herein the term lignin-based adhesive refers to an aqueous binder composition comprising at least some polymerizable substance and some crosslinking agent, wherein at least 20 weight-% of the polymerizable substance originates from lignin. Preferably the crosslinking agent is selected from the group of aldehydes. Preferably the crosslinking agent is selected from the group consisting of an aromatic aldehyde, glyoxal, furfuryl alcohol, caprolactam, and glycol compounds. Preferably the crosslinking agent is formaldehyde or paraformaldehyde or a combination thereof. More specific examples of lignin-based adhesives usable in the present invention can be found from the publication WO2015/114195. These adhesives attach reasonably well onto the primary application surface. Moreover, these adhesives have suitable viscous properties and density. A feature affecting the viscosity and density is the dry matter content of the adhesive. Such properties of the aforementioned adhesives are achieved at least, when the dry matter content of the adhesive is from 40 to 60 percentage by weight.

A preferable method comprises all the features A, B, C, and D as detailed above.

For the application of adhesive 330 with the method as discussed above, and for the roll coater 500 as discussed above, preferable material and shape of the application roll(s) 210, 220 of the roll coater 500 include the following values for the following parameters E to I. More precisely, the parameters are combinable, and the more parameters of the combination are present, the better the method for applying adhesive or the roll coater 500 seems to work.
(E) Hardness of the primary application roll 210. Preferably the primary application roll 210 is made of or coated with a material having a Shore hardness from 55 to 80 Sh(A), preferably 60 to 75 Sh(A). Typically, the primary application roll 210 comprises a hard core, and a coating having the aforementioned hardness. The hardness of the hard core may be e.g. at least 95 Sh(A), such as from 95 Sh(A) to 1.0×100 Sh(A) or from 95 Sh(A) to 70 Sh(D). Herein the expression 1.0x100 refers to a hundred with two significant digits. The thickness of the coating may be e.g. from 5 to 35 mm. Preferably, the surface of the secondary application roll 220 has a hardness within the same range as the surface of the first application roll 210. Also preferably, the surface of the secondary application roll 230 is as hard as the surface of the primary application roll 210. Herein, the surface of the roll refers to such a surface, of which surface normal is perpendicular to the axial direction (in case of primary application roll 210, the axial direction AX).
(F) Hardness of the primary doctor roll 230. Preferably at least the surface of the primary doctor roll 230 is made of a material having a Shore hardness of at least 95 Sh(A), such as from such as from 95 Sh(A) to 1.0x100 Sh(A) or from 95 Sh(A) to 70 Sh(D). Typically, the primary application roll comprises a hard core, and a coating having the aforementioned hardness. The thickness of the coating may be e.g. from 5 to 25 mm. Preferably, the surface of the secondary doctor roll 240 has a hardness within the same range as the surface of the first doctor roll 230. Also preferably, the surface of the secondary doctor roll 240 is as hard as the surface of the primary doctor roll 230. Herein, the surface of the roll refers to such a surface, of which surface normal is perpendicular to the axial direction.
(G) Shape of the surface of the primary application roll 210. Referring to Fig. 4a, preferably, the surface of the primary application roll 210 defines recessions or grooves. Preferably, the recessions or grooves are arranged substantially in the direction of the axis of rotation AX of the primary application roll. This allows for the adhesive 330 to flow into the recessions and/or grooves while pressing the wooden veneer 101 with the application roll 210. This improves the application of adhesive 330 onto the wooden veneer 101. In an embodiment, the primary application roll 210 comprises (i.e. defines, i.e. limits) a first primary recession 215 and a second primary recession 216, wherein the distance dᵣ (Fig. 4c) between the first primary recession 215 and the second primary recession 216 is, in a substantially axial direction AX of the primary application roll 210, from 0.5 mm to 3 mm. The substantially axial direction is parallel to the axis of rotation AX of the primary application roll, or forms, at a point of observation, an angle of at most 5 degrees with the axial direction AX. Given that the diameter of the first application roll 210 may be e.g. from 200 mm to 500 mm, and the relatively short distance of from 0.5 to 3 mm, the curving of said direction along the surface of the primary application roll 210 is negligible. Moreover, a width wᵣ (Fig. 4c) of the first primary recession 215, in the axial direction AX of the primary application roll 210, is from 0.3 mm to 1.5 mm. Moreover, a width of the second primary recession 216 is, in the axial direction AX of the primary application roll 210, from 0.3 mm to 1.5 mm. These values ensure a sufficiently even application of the adhesive 330. Furthermore, the depth hᵣ of the first primary recession 215 is preferably from 0.3 mm to 1 mm, and the depth of the second primary recession 216 is preferably from 0.3 mm to 1 mm. In practice the first primary recession 215 and the second primary recession 216 is preferably made as a thread, i.e. a single helical groove, onto the primary application roll. These values have been found suitable for the aforementioned amount of adhesive.

Referring to Fig. 4c, a surface normal Nᵣ of a wall 217 of the first primary recession 215 is preferably not parallel with a tangential direction of the primary application roll 210 at that point. Referring to Fig. 4c, the axial direction AX is an example of a tangential direction. However, provided that the recessions do not continue along the periphery of the application roll, the recessions may have also such a wall that the axial direction AX is comprised by the wall. Preferably, a surface normal Nᵣ of a wall 217 of the first primary recession 215 forms an angle α of from 15 to 60 degrees, preferably from 20 to 30 degrees with all the tangential directions of the primary application roll 210 at that point. Herein "that point" refers to the same point, at which the direction of surface normal is observed. This allows for the adhesive 330 to enter the first primary recession 215 more freely during application of adhesive 330. Typically, recessions have the form of a groove or grooves continuing in a substantially peripheral direction. In such a case, the surface normal Nᵣ of a wall 217 of the first primary recession 215 preferably is not parallel with the axial direction AX of the primary application roll 210. Preferably, a surface normal Nᵣ of a wall of the first primary recession 215 forms an angle α of from 15 to 60 degrees, preferably from 20 to 30 degrees with the axial direction AX of the primary application roll 210.

What has been said about the shape of the surface of the primary application roll 210 applies, preferably, also to the shape of the surface of the secondary application 220 roll *mutatis mutandis.*
(H) The diameter of the application roll 210, 220. On one hand, the diameter of the application roll 210, 220 needs to be reasonable small, in order to generate a proper surface pressure onto the surface of the veneer 101. On the other hand, the diameter of the application roll 210, 220 needs to be reasonably large, in order to keeps the centrifugal forces acting on the adhesive 330 reasonably low. The diameter of the primary application roll 210 may be from 150 mm to 500 mm, preferably from 250 mm to 350 mm. What has been said about the size of the primary application roll 210 applies, preferably, also to the secondary application 220 roll *mutatis mutandis.*
(I) The diameter of the doctor roll 230, 240. It has been found that the diameter of the primary doctor roll 230 is preferably less than the diameter of the primary application roll 210. The diameter of the primary doctor roll 230 may be from 100 mm to 400 mm, preferably from 200 mm to 300 mm. What has been said about the size of the primary doctor roll (relative to application roll and/or in absolute terms) applies, preferably, also to the secondary doctor roll *mutatis mutandis.*

A preferable method comprises at least the features E, G, and H of the aforementioned feature list; optionally in addition to the features A, B, C, and D. A preferable roll coater comprises at least the features E, G, and H of the aforementioned feature list. Another preferable method comprises the features E, F, G, H, and I of the aforementioned feature list; optionally in addition to the features A, B, C, and D. A preferable roll coater comprises the features the features E, F, G, H, and I of the aforementioned feature list.

As indicated above, the ranges of adjusting the amount of adhesive only by adjusting the ratio of the roll speeds is somewhat limited. Therefore, in an embodiment, the roll coater 500 comprises means 234, 235 (Figs. 5a and 5b) for adjusting a width of the primary feeding gap g₁. In an embodiment, the roll coater 500 comprises means 234 for adjusting a width of the primary feeding gap g₁ at a first end of the pair of the primary doctor roll 230 and the primary application roll 210; and means 235 for adjusting a width of the primary feeding gap g₁ at a second end of the pair of the primary doctor roll 230 and primary application roll 210, wherein the second end is opposite to the first end. In an embodiment, the roll coater further comprises means for adjusting a width of the secondary feeding gap g₂. In an embodiment, the roll coater comprises means for adjusting a width of the secondary feeding gap at a first end of the pair of the secondary doctor roll and the secondary application roll; and means for adjusting a width of the secondary feeding gap g₂ at a second end of the pair of the secondary doctor roll and the secondary application roll, wherein the second end is opposite to the first end.

The means for adjusting the width of the primary or secondary feeding gap (g₁, g₂) may comprise, at a first end of the pair of the doctor roll and the application roll, e.g. a wedge, a nut and a bolt arrangement, or hydraulic means. At the first end, the means 234 for adjusting the width of the primary feeding gap g₁ is configured to move the axis of the primary doctor roll 230 relative to the axis of the primary application roll 210 in such a way that at the first end, the distance between the axes is changed. Preferably, the means 234 is configured to move only the primary doctor roll 230, while maintaining the position of the application roll 210 relative to ground. This is because the application gap 215 can thus be set constant, which is desirable, when adhesive 330 is applied onto the same kind of wooden veneers 101 even after such an adjustment. For example, when the surface of the primary application roll 210 wears, one may need to move the primary doctor roll 230 closer to the primary application roll 210. Typically, a part of the means 234, 235 for adjusting the width of the primary feeding gap g₁ is arranged also to adjust the width of the primary feeding gap g₁ at the second end, the second end being opposite to the first end. What has been said about adjusting the distance at the first end of the pair of rolls and the means for adjusting the distance at the first end of the pair of rolls applies also at the second end of the pair of rolls. What has been said about adjusting the width of the primary feeding gap g₁ by moving the primary roll(s) relative to each other, applies also to adjusting the width of the secondary feeding gap g₂ *mutatis mutandis.*

When the means 234, 235 comprise a wedge, by moving the wedge, the distance between the axis of a doctor roll 230, 240 and an application roll 210, 220 can be changed as known to a skilled person. When the means comprises a nut and a bolt, one arranged in connection with an axis of a doctor roll 230, 240 and the other arranged in connection with an axis of an application roll 210, 220 by turning the bolt relative to the nut, the distance between the axis of a doctor roll 230, 240 and an application roll 210, 220 can be changed as known to a skilled person. Hydraulic means can also be used, as known per se. It is also pointed out that typically, in the manufacture of plywood, changes on the order of from 0.01 mm to 0.02 mm are sufficient for significantly affecting the amount of adhesive applied. Thus, the adjustment of this kind is sensitive.

Correspondingly, an embodiment of the method comprises adjusting a width of the primary feeding gap g₁. An embodiment comprises adjusting the width of the primary feeding gap g₁ at a first end of the pair of primary doctor roll 230 and primary application roll 210. An embodiment comprises adjusting the width of the primary feeding gap g₁ at a second end of the pair of primary doctor roll 230 and primary application roll 210, wherein the second end of the pair of primary doctor roll 230 and primary application roll 210 is opposite to the first end of the pair of primary doctor roll 230 and primary application roll 210. Furthermore, an embodiment of the method comprises adjusting a width of the secondary feeding gap g₂. An embodiment comprises adjusting the width of the secondary feeding gap g₂ at a first end of the pair of secondary doctor roll 240 and secondary application roll 220. An embodiment comprises adjusting the width of the secondary feeding gap g₂ at a second end of the pair of secondary doctor 240 roll and secondary application roll 220, wherein the second end of the pair of secondary doctor roll and secondary application roll is opposite to the first end of the pair of secondary doctor roll and secondary application roll.

The doctor roll (primary and/or secondary) is preferably also configured to be movable relative to the application roll (primary, and/or secondary, respectively) by at least 10 cm. This helps the maintenance of the doctor roll and helps also cleaning of the means for adjusting the width of the primary feeding gap and the means for adjusting the width of the secondary feeding gap. The doctor roll (primary and/or secondary) is preferably configured to be easily movable in the aforementioned manner. The doctor roll (primary and/or secondary) is preferably configured to be movable in the aforementioned manner by opening only at most four locking means, such as nuts or bolts.

When manufacturing in particular plywood, it has been found that the use of raw materials can be improved (i.e. made more efficient) by carefully designing, which veneers are applied with adhesive with the method and device as discussed above, and onto which veneers adhesive is not applied.

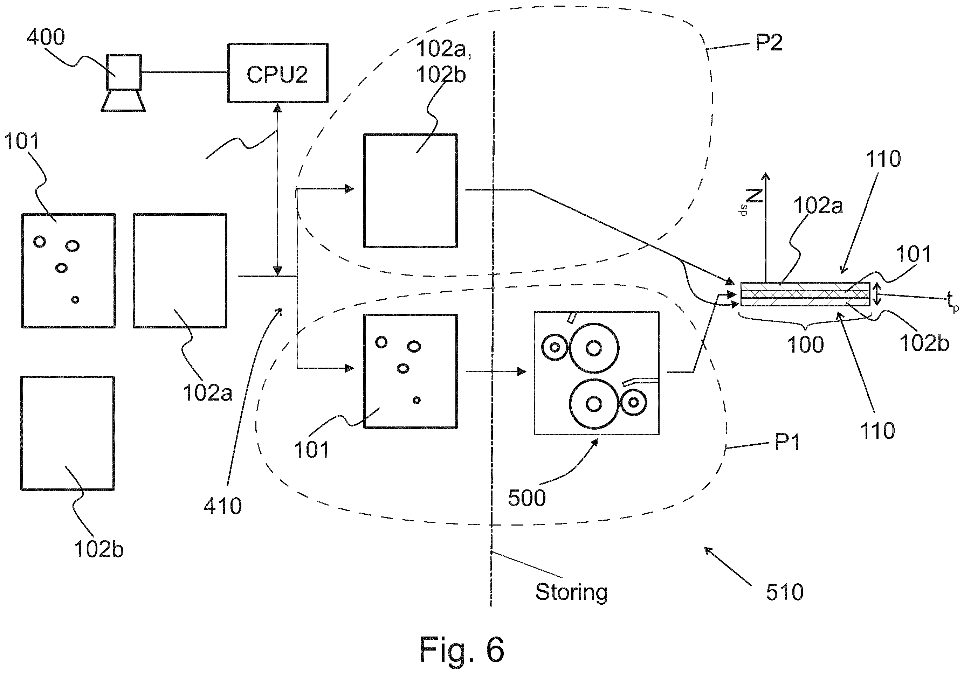

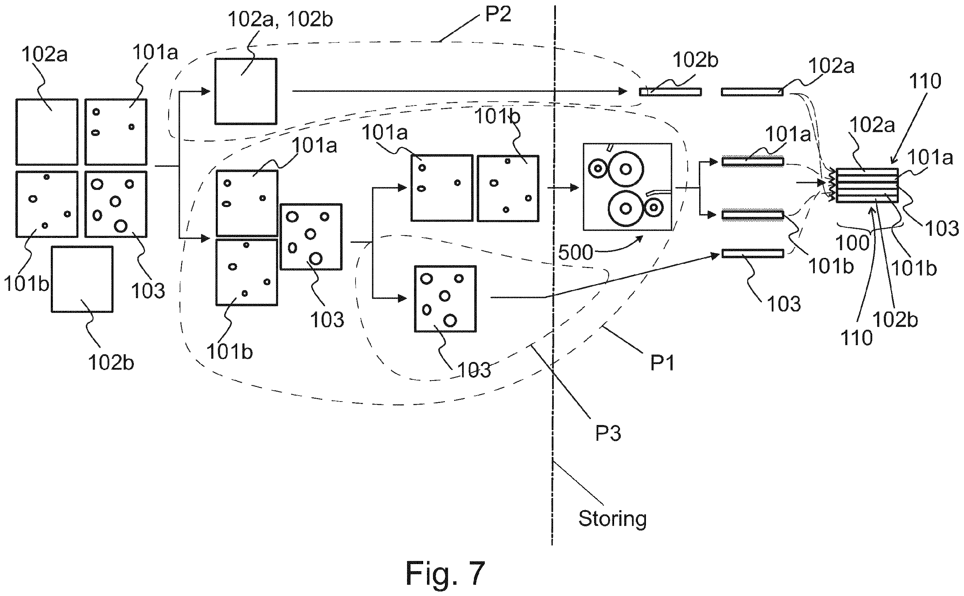

In particular, it has been found that veneers of high quality can be used as a surface veneer, i.e. a veneer forming a main surface of the plywood panel. Correspondingly, it has been found that veneers of lesser quality can be used as mid-veneers, in such a way that adhesive is applied to at least some of the mid-veneers. The term mid-veneer refers to a veneer that is not a surface veneer. Referring to Fig. 6, the veneer 101 is a mid-veneer of the plywood panel 100, while the veneers 102a and 102b are surface veneers. In a more typical example of Fig. 7, the veneers 101a, 101b, and 103 are mid-veneers of the plywood panel 100, while the veneers 102a and 102b are surface veneers.

The term quality refers to multiple features of a veneer 101, 102, 103. The quality can be characterized e.g. by the following quality factors
- presence of knots (yes / no)
- size of knots (maximum, average, or median),
- presence of holes (yes / no)
- size of holes (maximum, average, or median),
- maximum width of a split,
- maximum length of a split,
- presence and/or amount and/or size of abnormalities (yes / no).

The abnormalities may include e.g.
- turning faults,
- worm holes,
- irregular wood structure (curly grain, spiral grain, etc.),
- discoloration of wood, and
- fungal decay (rotten wood).

Also other quality factors may be applied if needed. Applicable quality factors can be found from e.g. the standards ISO 2426-1 (2000-12-01), ISO 2426-2 (2000-12-01), and ISO 2426-3 (2000-12-01). ISO 2426-2 applies for veneers of hardwood, while ISO 2426-3 applies for veneers of softwood.

Typically, if at least one of the aforementioned quality factors does not full fill the requirements of a surface veneer, the veneer will be classified as a mid-veneer. Conversely, such a veneer 102, of which quality exceeds a limit is classified as a surface veneer, and adhesive 330 is not applied to such a veneer 102 by the roll coater 500. Furthermore, such a veneer 101, 103, of which quality does not exceed the limit is classified as a mid-veneer, and adhesive may applied to such a veneer by the roll coater 500. It is, however, pointed out that adhesive is not applied to all mid-veneers, as exemplified below and in Fig. 7.

It has been found, that by applying adhesive with the roll coater 500 onto only such veneers, of which quality is sufficiently high, the adhesive will be applied in a more uniform manner, in effect leading to the possibility of using less adhesive to achieve the sufficient strength properties of the wood laminate panel, e.g. plywood panel 101, 101a, 101b. This can also decrease the bending behaviour of the panel, which seems to be related to the uneven amount of adhesive (see above).

Using hardwood as an example, veneers 102 having the quality of "E" according to ISO 2426-2 (date 2000-12-01) can be classified as surface veneers, while the other veneers 101, 103 can be classified as a mid-veneer. Using softwood as another example, veneers 102 having the quality of "E" according to ISO 2426-3 (date 2000-12-01) can be classified as surface veneers, while the other veneers 101, 103 can be classified as a mid-veneer. Variation to the precise quality classification limit may be applied according to the feedstock such that a proper ratio of surface veneers to mid-veneers will be obtained, at least on the long run.

Referring to Fig. 6, an embodiment of the method comprises determining that a quality of the first wooden veneer 101 does not exceed a limit and determining that a quality of a second wooden veneer 102a, 102b exceeds the limit. A method for manufacturing a wood laminate panel 100, such as a plywood panel 100, further comprises stacking the first wooden veneer 101 and the second wooden veneer 102a, 102b onto each other to form a part of a wood laminate panel 100 (such as a plywood panel 100) such that the second wooden veneer 102a, 102b comprises a main surface 110 of the wood laminate panel 100. Herein the main surface 110 of the wood laminate panel 100 (such as a plywood panel) refers to the surface of the panel 100 of which surface normal is parallel to the thickness tₚ of the wood laminate panel 100. Moreover, the adhesive 330 is not applied onto the main surface 110 of the wood laminate panel with the roll coater 500. Still further, the second wooden veneer 102 may be a neighbouring veneer to the first wooden veneer 101, in which case no other wooden veneer is left in between these veneers. As indicated above, adhesive is applied onto both surfaces of the first veneer 101 by the roll coater 500. What has been said above applies to one surface veneer and one main surface 110 of the plywood panel. However, as indicated in Figs. 6 and 7, a plywood panel typically comprises two main surfaces 110, and two surface veneers 102a, 102b in the aforementioned meaning.

An embodiment of the method comprises determining a quality of a wooden veneer 101, 101a, 101b, 102a, 102b, 103 using the standard ISO 2426-2 (2000-12-01) or 2426-3 (2000-12-01). More precisely, an embodiment comprises determining whether the wooden veneer is hardwood or softwood, and [a] provided that the wooden veneer is hardwood, determining the quality thereof using the standard ISO 2426-2 (2000-12-01), and [b] otherwise (i.e. when the wooden veneer is softwood), determining the quality thereof using the standard ISO 2426-3 (2000-12-01).

Preferably, the quality is determined automatically. Thus, an embodiment of the corresponding arrangement 510 comprises a detector 400 (Fig. 6) configured to detect information indicative of the quality of a wooden veneer 101, 101a, 101b, 102a, 102b, 103. The detector 400 may be e.g. an imaging means, such as a digital camera. From the information, the control unit CPU1 or another control unit CPU2 is arranged to determine the quality of the corresponding wooden veneer. As evident, the quality refers to the quality of the individual veneer. Thus, a quality is associated with each wooden veneer. Such association is done automatically by the control unit CPU1 or the other control unit CPU2.

A corresponding arrangement 510 comprises a roll coater 500 as discussed above. The arrangement further comprises a first passage P1 and a second passage P2, wherein the first passage P1 is connected to the roll coater 500 and the second passage P2 is configured to bypass the roll coater 500. The arrangement comprises means for guiding the wooden veneer 101, 101a, 101b, 102a, 102b, 103 to the first passage or the second passage. Furthermore the arrangement optionally comprises another control unit CPU2. The control unit CPU1, which is used to control the rotation speed of the primary doctor roll, or the other control unit CPU2 is configured to guide wooden veneers 102a, 102b of which quality exceeds a limit to the second passage P2 and guide the other wooden veneers (101 in Fig. 6; 101a, 101b, 103 in Fig. 7) to the first passage P1. In this way, adhesive 330 is not applied to the wooden veneers 102a, 102b guided to the second passage P2 by the roll coater 500; and adhesive 330 is applied by the roll coater 500 to at least some of the wooden veneers (101 in Fig. 6; 101a, 101b, 103 in Fig. 7) guided to the first passage P1.

Referring to Fig. 6, the arrangement 510 may further comprise a storage. For example, after the veneers have been classified as indicated above, the veneers may be stored. This is indicated in Fig. 6 by the line "storing". The veneers may be transferred to the storage, and when needed, transferred from the storage for use. The arrangement may comprise a first storage e.g. for surface veneers 102a and 102b, and a second storage for mid-veneers 101.

However, it has been found that, by the roll coater 500, adhesive can be better applied onto veneers 101a, 101b, 101 of sufficiently high quality. Moreover, as indicated above, only some (roughly half) of the mid-veneers need to be coated with adhesive. Therefore, it has been found that preferably the mid-veneers are further classified into two classes according to their quality; and only a veneer (101a, 101b) of better quality is applied with adhesive 330. Such a veneer is used as a mid-veneer. Correspondingly, a veneer 103 having the worst quality is not applied with adhesive, and is used as another mid-veneer. As indicated above, only every second mid-veneer needs to coated with adhesive, when adhesive is applied to both sides of a veneer. This process and a corresponding arrangement is schematically illustrated in Fig. 7.

Correspondingly, an embodiment of the method further comprises determining that a quality of a third wooden veneer 103 is less than the quality of the first wooden veneer 101a, 101b. Moreover, the method further comprises stacking the first wooden veneer 101a, 101b (i.e. the one coated with adhesive), the second wooden veneer 102a, 102b (i.e. the surface veneer), and the third wooden veneer 103 (i.e. that of worst quality) onto each other in such a way that the first wooden veneer 101a, 101b is arranged in between the third wooden veneer 103 and the second wooden veneer 102a, 102b. As indicated above, the second wooden veneer 102a, 102b comprises a main surface 110 of the wood laminate panel 110. Moreover, as motivated above, the adhesive is not applied onto the third 103 wooden veneer with the roll coater 500. Still further, the second wooden veneer 102 may be a neighbouring veneer to the first wooden veneer 101, in which case no other wooden veneer is left in between these veneers. Still further, the third wooden veneer 103 may be another neighbouring veneer to the first wooden veneer 101, in which case no other wooden veneer is left in between these veneers.

Referring to Fig. 7, the arrangement 510 may further comprise a storage. For example, after the veneers have been classified as indicated above, the veneers may be stored. This is indicated in Fig. 7 by the line "storing". The veneers may be transferred to the storage, and from the storage for use. The arrangement may comprise a first storage e.g. for surface veneers 102a and 102b; a second storage for high-quality mid-veneers 101a and 101b; and a third storage for low-quality mid-veneers 103.

Using hardwood as an example, if veneers having the quality of any of the classes I, II, III, or IV according to the standard ISO 2426-2 (date 2000-12-01) are classified as mid-veneers, it is possible, e.g. to apply adhesive only to veneers having the quality corresponding to class I or II by the roll coater 500. Correspondingly, veneers having the quality corresponding to class III or IV would be used as such mid-veneers onto which adhesive is not applied. The precise quality limit depends, naturally, on the feedstock. The limit may also be dynamic, i.e. depending on the variations in the feedstock. As known, adhesive is applied onto approximately half of the mid-veneers. These principles can be applied to softwood *mutatis mutandis,* using the quality according to the standard ISO 2426-3 (date 2000-12-01).

A corresponding arrangement 510 further comprises a third passage P3 as part of the first passage P1, wherein the third passage P3 is configured to bypass the roll coater 500. Moreover, the control unit CPU1, which is used to control the rotation speed of the primary doctor roll, or the other control unit CPU2 is configured to guide wooden veneers 103 of which quality does not exceeds a second limit to the third passage P3. In this way, adhesive 330 is not applied to the wooden veneers 103 guided to the third passage P3 by the roll coater 500. Preferably, adhesive 330 is not applied to the wooden veneers 103 guided to the third passage P3 by any other roll coater. Preferably, adhesive 330 is not applied to the wooden veneers 103 guided to the third passage P3 by any means

### Example

Referring to Fig. 8a adhesive was applied on wooden veneers with a method, in which the primary application roll 210 was rotated only with a first application roll speed va1(t1) equalling the peripheral speed of the primary application roll 210 and the primary doctor roll 230 was rotated with a first doctor roll speed vd1(t1) equalling the peripheral speed of the primary doctor roll 230. However, in contrast to the presented method, these velocities were constant throughout the process, and the amount of adhesive was controlled only by the width of the feeding gaps.

The horizontal axis shows the amount in units of g/m². The amount was measured from several coated veneers, from multiple locations on each coated veneer. The target amount of the adhesive (Fig 8a: Target) was 155 g/m²; while a lower acceptable limit (Fig. 8a: LSL) was set to 145 g/m². As indicated in Fig. 8a, the deviation of the amount of adhesive is reasonably large. In the case of Fig. 8a, the standard deviation has been 6.4 g/m². Therefore, to have enough adhesive for at least most of the veneers and on at least most of their locations, the process has been controlled in such a way that the average amount of adhesive is much larger than the target value. In the case of Fig. 8a, the average has been 165 g/m². Fig. 8a also indicates an upper set limit (USL) of 163 g/m².

Referring to Fig. 8b adhesive was applied on wooden veneers with a method according to an embodiment of the invention.

The horizontal axis shows the amount in units of g/m². The amount was measured from several coated veneers, from multiple locations on each coated veneer. The target amount of the adhesive (Fig 8b: Target) was 155 g/m²; while a lower acceptable limit (Fig. 8b: LSL) was set to 145 g/m². As indicated in Fig. 8b, the deviation of the amount of adhesive is much less than in Fig. 8a, the standard deviation being 4.5 g/m². Thus, the process can be controlled so that the true average amount of adhesive it at least close to the target value. In the case of Fig. 8b, the average has been 155 g/m². Fig. 8b also indicates an upper set limit (USL) of 163 g/m².

As the amount of adhesive used was decreased from 165 g/m² to 155 g/m², the same amount of veneers were coated by 6 % less adhesive. Evidently this results in saving in material costs. Moreover, the small deviation results also in improved quality indicated e.g. by less curving, as indicated above.

## Claims

1. A method for applying adhesive (330) on at least a first wooden veneer (101, 101a, 101b) using a roll coater (500), the roll coater (500) comprising
- a primary application roll (210),
- a secondary application roll (220) substantially parallel to the primary application roll (210) such that an application gap (215) is left in between the primary application roll (210) and the secondary application roll (220),
- a primary doctor roll (230) substantially parallel to the primary application roll (210), whereby a primary feeding gap (g₁) is left in between the primary doctor roll (230) and the primary application roll (210), a width of the primary feeding gap (g₁) being at most 0.2 mm, and
- a secondary doctor roll (240) substantially parallel to the secondary application roll (220), whereby a secondary feeding gap (g₂) is left in between the secondary doctor roll (240) and the secondary application roll (220), a width of the secondary feeding gap (g₂) being at most 0.2 mm; the method comprising
- feeding the adhesive (330) through the primary feeding gap (g₁) onto the primary application roll (210),
- feeding the adhesive (330) through the secondary feeding gap (g₂) onto the secondary application roll (220), and
- feeding the first wooden veneer (101, 101a, 101b) through the application gap (215) while rotating the primary application roll (210) and the secondary application roll (220), whereby the primary application roll (210) applies adhesive (330) onto a primary surface (111) of the first wooden veneer, and the secondary application roll (220) applies adhesive (330) onto a secondary surface (121) of the first wooden veneer (101),
the method comprising
- at a first time (t1)
• rotating the primary application roll (210) with a first application roll speed (va1(t1)) equalling the peripheral speed of the primary application roll (210) at the first time (t1) and
• rotating the primary doctor roll (230) with a first doctor roll speed (vd1(t1)) equalling the peripheral speed of the primary doctor roll (230) at the first time (t1), and
- at a second time (t2)
• rotating the primary application roll (210) with a second application roll speed (va1(t2)) equalling the peripheral speed of the primary application roll (210) at the second time (t2) and
• rotating the primary doctor roll (230) with a second doctor roll speed (vd1(t2)) equalling the peripheral speed of the primary doctor roll (230) at the second time (t2), wherein
- the ratio (vd1(t1)/va1(t1)) of the first doctor roll speed (vd1(t1)) to the first application roll speed (va1(t1)) is different from the ratio (vd1(t2)/va1(t2)) of the second doctor roll speed (vd1(t2)) to the second application roll speed (va1(t2)),
**characterized by**
- rotating the primary doctor roll (230) and the primary application roll (210) in such a way that that, at a proximity of the primary feeding gap (gi), the periphery of the primary doctor roll (230) moves in the same direction as the periphery of the primary application roll (210), wherein
- the ratio (vd1(t1)/va1(t1)) of the first doctor roll speed (vd1(t1)) to the first application roll speed (va1(t1)) is from 10 % to 30 %, and
- the ratio (vd1(t2)/va1(t2)) of the second doctor roll speed (vd1(t2)) to the second application roll speed (va1(t2)) is from 10 % to 30 %.

2. The method of claim 1, wherein
- the ratio (vd1(t1)/va1(t1)) of the of the first doctor roll speed (vd1(t1)) to the first application roll speed (va1(t1)) has a first value (r1) and
- the ratio (vd1(t2)/va1(t2)) of the of the second doctor roll speed (vd1(t2)) to the second application roll speed (va1(t2)) has a second value (r2), wherein
- the difference between the second value (r2) and the first value (r1) is at least 3 percentage units.

3. The method of any of the claim 1 or 2, wherein
- before application of the adhesive (330), the first wooden veneer (101, 101a, 101b) has a thickness (tᵥ) and
- the width (w_{g}) of the application gap (215) in the direction of the thickness (tᵥ) during application of the adhesive (330) is from 0.05 mm to 0.5 mm less than the thickness (tᵥ), and the method comprises
- feeding the first wooden veneer (101, 101a, 101b) through the application gap (215) with a velocity (v) that equals the peripheral speed of the primary application roll (va1(t1), va1(t2));
preferably
- the thickness (tᵥ) of the first wooden veneer (101, 101a, 101b) is from 1 mm to 4 mm.

4. The method of any of the claims 1 to 3, wherein
- the first wooden veneer (101, 101a, 101b) comprises grains (130) having a grain direction (132), the method comprising
- feeding the first wooden veneer (101, 101a, 101b) through the application gap (215) into a feeding direction (fd) that is substantially parallel to the grain direction (132).

5. The method of any of the claims 1 to 4, wherein
- the adhesive (330) has a viscosity from 15 s to 45 s as measured according to standard ISO 2431:2011 by using a flow cup having and orifice diameter of 6 mm and/or
- first application roll speed (va1(t1)) is from 50 m/s to 500 m/s and/or
- the method comprises applying from 120 g/m² to 200 g/m² of adhesive (330) on at least the primary surface (111), preferably also on the secondary surface (121) of the first wooden veneer (101) and/or
- the adhesive (330) comprises at least one of phenolic resin, phenol-formaldehyde, urea-melamine, melamine formaldehyde, resorcinol, and a lignin-based adhesive.

6. The method of any of the claims 1 to 5, comprising
- determining that a quality of the first wooden veneer (101, 101a, 101b) does not exceed a limit,
- determining that a quality of a second wooden veneer (102a, 102b) exceeds the limit, and
- stacking the first wooden veneer (101, 101a, 101b) and the second wooden veneer (102a, 102b) onto each other to form a part of a wood laminate panel (100) such that
- the second wooden veneer (102a, 102b) comprises a main surface (110) of the wood laminate panel (100), wherein the surface normal (Nₛₚ) of the main surface (110) of the wood laminate panel (100) is parallel to the thickness (tₚ) of the wood laminate panel (100), and
- the adhesive (330) is not applied onto the main surface (110) of the wood laminate panel (100) with the roll coater (500).

7. The method of claim 6, comprising
- determining that a quality of a third wooden veneer (103) is less than the quality of the first wooden veneer (101, 101a, 101b), the method further comprising
- stacking the first wooden veneer (101, 101a, 101b), the second wooden veneer (102a, 102b), and the third wooden veneer (103) onto each other in such a way that
- the first wooden veneer (101, 101a, 101b) is arranged in between the third wooden veneer (101) and the second wooden veneer (102a, 102b), wherein
- the adhesive (330) is not applied onto a surface of the third wooden veneer (103) with the roll coater (500).

8. A roll coater (500) suitable for applying adhesive (330) onto a wooden veneer (101, 101a, 101b), the roll coater (500) comprising
- a primary application roll (210),
- a secondary application (220) roll substantially parallel to the primary application roll (210) such that an application gap (215) is left in between the primary application roll (210) and the secondary application roll (220),
- a primary doctor roll (230) substantially parallel to the primary application roll (210), whereby a primary feeding gap (g₁) is left in between the primary doctor roll (230) and the primary application roll (210), a width of the primary feeding gap (g₁) being at most 0.2 mm,
- a secondary doctor roll (240) substantially parallel to the secondary application roll (220), whereby a secondary feeding gap (g₂) is left in between the secondary doctor roll (240) and the secondary application roll (220), a width of the secondary feeding gap (g₂) being at most 0.2 mm,
- means (311, 312) for feeding the adhesive (330) into a primary space (301) defined by the primary application roll (210) and the primary doctor roll (230), wherein the adhesive (330) is configured to flow from the primary space (301) through the primary feeding gap (g₁) onto the primary application roll (210),
- means (321, 322) for feeding the adhesive (330) into a secondary space (302) defined by the secondary application roll (220) and the secondary doctor roll (340), wherein the adhesive (330) is configured to flow from the secondary space (302) through the secondary feeding gap (g₂) onto the secondary application roll (220),
- means (611) for rotating the primary application roll (210),
- means (631) for rotating the primary doctor roll (230), and
- a control unit (CPU1) configured to
∘ at a first time (t1)
• rotate the primary application roll (210) with a first application roll speed (va1(t1)) equalling the peripheral speed of the primary application roll (210) at the first time (t1) and
• rotate the primary doctor roll (230) with a first doctor roll speed (vd1(t1)) equalling the peripheral speed of the primary doctor roll (230) at the first time (t1), and
∘ after the first time (t1), receive a signal (S1) indicative of a need for changing the amount of adhesive to be applied, and
∘ in response to the signal (S1), at a second time (t2)
• rotate the primary application roll (210) with a second application roll speed (va1(t2)) equalling the peripheral speed of the primary application roll (210) at the second time (t2) and
• rotate the primary doctor roll (230) with a second doctor roll speed (vd1(t2)) equalling the peripheral speed of the primary doctor roll (230) at the second time (t2), wherein
- the ratio (vd1(t1)/va1(t1)) of the first doctor roll speed (vd1(t1)) to the first application roll speed (va1(t1)) is different from the ratio (vd1(t2)/va1(t2)) of the second doctor roll speed (vd1(t2)) to the second application roll speed (va1(t2)),
**characterized in that**
- the control unit (CPU1) is configured to rotate the primary doctor roll (230) and the primary application roll (210) using the means (611) for rotating the primary application roll (210) and the means (631) for rotating the primary doctor roll (230) in such a way that, at a proximity of the primary feeding gap (gi), the periphery of the primary doctor roll (230) moves in the same direction as the periphery of the primary application roll (210), wherein
- the ratio (vd1(t1)/va1(t1)) of the first doctor roll speed (vd1(t1)) to the first application roll speed (va1(t1)) is from 10 % to 30 % and
- the ratio (vd1(t2)/va1(t2)) of the second doctor roll speed (vd1(t2)) to the second application roll speed (va1(t2)) is from 10 % to 30 %.

9. The roll coater (500) of claim 8, wherein the control unit (CPU1) is configured to rotate the primary doctor roll (230) and the primary application roll (210) using the means (611) for rotating the primary application roll (210) and the means (631) for rotating the primary doctor roll (230) in such a way that
- the ratio (vd1(t1)/va1(t1)) of the of the first doctor roll speed (vd1(t1)) to the first application roll speed (va1(t1)) has a first value (r1) and
- the ratio of (vd1(t2)/va1(t2)) the of the second doctor roll speed (vd1(t2)) to the second application roll speed (va1(t2)) has a second value (r2), wherein
- the difference between the second value (r2) and the first value (r1) is at least 3 percentage units.

10. The roll coater (500) of the claim 8 or 9, wherein
- a width of the application gap (215) is at most 4 mm.

11. A arrangement (510) comprising
- the roll coater (500) of any of the claims 8 to 10,
- a first passage (P1) and a second passage (P2), wherein the first passage (P1) is connected to the roll coater (500) and the second passage (P2) is configured to bypass the roll coater (500),
- a detector (400) configured to detect information indicative of a quality of individual wooden veneers (101, 101, 101b, 102a, 102b, 103),
- a guiding device (410) configured to guide the at least one wooden veneer to the first passage (P1) and at least one wooden veneer to the second passage (P2), wherein
- the control unit (CPU1) or another control unit (CPU2) is configured to determine the quality of the individual veneers using the information indicative of a quality of the individual wooden veneers, and
- the control unit (CPU1) or another control unit (CPU2) is configured to, by using the guiding device (410)
∘ guide wooden veneers (102a, 102b) of which quality exceeds a limit to the second passage (P2) and
∘ guide the other wooden veneers (101, 101a, 101b, 103) to the first passage (P1), whereby
- the adhesive (330) is not applied to the wooden veneers (102a, 102b) guided to the second passage (P2) by the roll coater (500) and
- the adhesive (330) is applied by the roll coater (500) to at least some of the wooden veneers (101, 101a, 101b, 103) guided to the first passage (P1).

12. The method, the roll coater (500), or the arrangement (510) of any of the preceding claims, wherein
- the roll coater (500) comprises means (234, 235) for adjusting a width of the primary feeding gap (g₁);
preferably,
- the method comprises adjusting the width of the primary feeding gap (g₁).

13. The method, the roll coater (500), or the arrangement (510) of any of the preceding claims, wherein
- the hardness of the primary application roll (210) is from 60 to 75 Sh(A), preferably
- the hardness of the secondary application roll (220) is from 60 to 75 Sh(A), more preferably
- the hardness of the secondary application roll (220) equals the hardness of the primary application roll (210).

14. The method, the roll coater (500), or the arrangement (510) of any of the preceding claims, wherein
- the primary application roll (210) defines a first primary recession (215) and a second primary recession (216), wherein
- a distance (dᵣ) between the first primary recession (215) and the second primary recession (216) is from 0.5 mm to 3 mm,
- a width (wᵣ) of the first primary recession (215) is from 0.3 mm to 1.5 mm,
- a width of the second primary recession (216) is from 0.3 mm to 1.5 mm,
- the depth (hᵣ) of the first primary recession (215) is from 0.3 mm to 1 mm, and
- the depth of the second primary recession is from 0.3 mm to 1 mm; preferably
- the secondary application roll (220) defines a first secondary recession and a second secondary recession, wherein
- a distance between the first secondary recession and the second secondary recession is from 0.5 mm to 3 mm,
- a width of the first secondary recession is from 0.3 mm to 1.5 mm,
- a width of the second secondary recession is from 0.3 mm to 1.5 mm,
- the depth of the first secondary recession is from 0.3 mm to 1 mm, and
- the depth of the second secondary recession is from 0.3 mm to 1 mm.

## Patentansprüche

1. Verfahren zum Auftragen von Klebstoff (330) auf mindestens ein erstes Holzfurnier (101, 101a, 101b) unter Verwendung einer Walzenauftragsmaschine (500), wobei die Walzenauftragsmaschine (500) Folgendes umfasst:
- eine primäre Auftragswalze (210),
- eine sekundäre Auftragswalze (220), die im Wesentlichen parallel zu der primären Auftragswalze (210) derart angeordnet ist, dass ein Auftragsspalt (215) zwischen der primären Auftragswalze (210) und der sekundären Auftragswalze (220) verbleibt,
- eine primäre Dosierwalze (230), die Wesentlichen parallel zu der primären Auftragswalze (210) angeordnet ist, wodurch ein primärer Zuführspalt (g₁) zwischen der primären Dosierwalze (230) und der primären Auftragswalze (210) verbleibt, wobei eine Breite des primären Zuführspalts (g₁) höchstens 0,2 mm beträgt, und
- eine sekundäre Dosierwalze (240), die Wesentlichen parallel zu der sekundären Auftragswalze (220) angeordnet ist, wodurch ein sekundärer Zuführspalt (g₂) zwischen der sekundären Dosierwalze (240) und der sekundären Auftragswalze (220) verbleibt, wobei eine Breite des sekundären Zuführspalts (g₂) höchstens 0,2 mm beträgt; wobei das Verfahren Folgendes umfasst:
- Zuführen des Klebstoffs (330) durch den primären Zuführspalt (g₁) auf die primäre Auftragswalze (210),
- Zuführen des Klebstoffs (330) durch den sekundären Zuführspalt (g₂) auf die sekundäre Auftragswalze (220) und
- Zuführen des ersten Holzfurniers (101, 101a, 101b) durch den Auftragsspalt (215), während die primäre Auftragswalze (210) und die sekundäre Auftragswalze (220) gedreht werden, wodurch die primäre Auftragswalze (210) den Klebstoff (330) auf eine primäre Oberfläche (111) des ersten Holzfurniers aufträgt und die sekundäre Auftragswalze (220) den Klebstoff (330) auf eine sekundäre Oberfläche (121) des ersten Holzfurniers (101) aufträgt,
wobei das Verfahren Folgendes umfasst:
- an einem ersten Zeitpunkt (t1)
• Drehen der primären Auftragswalze (210) mit einer ersten Auftragswalzengeschwindigkeit (va1(t1)), die der Umfangsgeschwindigkeit der primären Auftragswalze (210) am ersten Zeitpunkt (t1) gleicht, und
• Drehen der primären Dosierwalze (230) mit einer ersten Dosierwalzengeschwindigkeit (vd1(t1)), die der Umfangsgeschwindigkeit der primären Dosierwalze (230) am ersten Zeitpunkt (t1) gleicht, und
- an einem zweiten Zeitpunkt (t2)
• Drehen der primären Auftragswalze (210) mit einer zweiten Auftragswalzengeschwindigkeit (va1(t2)), die der Umfangsgeschwindigkeit der primären Auftragswalze (210) am zweiten Zeitpunkt (t2) gleicht, und
• Drehen der primären Dosierwalze (230) mit einer zweiten Dosierwalzengeschwindigkeit (vd1(t2)), die der Umfangsgeschwindigkeit der primären Dosierwalze (230) am zweiten Zeitpunkt (t2) gleicht, wobei
- das Verhältnis (vd1(t1)/va1(t1)) zwischen der ersten Dosierwalzengeschwindigkeit (vd1(t1)) und der ersten Auftragswalzengeschwindigkeit (va1(t1)) vom Verhältnis (vd1(t2)/va1(t2)) zwischen der zweiten Dosierwalzengeschwindigkeit (vd1(t2)) und der zweiten Auftragswalzengeschwindigkeit (va1(t2)) verschieden ist,
**gekennzeichnet durch**
- Drehen der primären Dosierwalze (230) und der primären Auftragswalze (210) derart, dass nahe dem primären Zuführspalt (g₁) der Umfang der primären Dosierwalze (230) sich in derselben Richtung wie der Umfang der primären Auftragswalze (210) bewegt, wobei
- das Verhältnis (vd1(t1)/va1(t1)) zwischen der ersten Dosierwalzengeschwindigkeit (vd1(t1)) und der ersten Auftragswalzengeschwindigkeit (va1(t1)) 10 % bis 30 % beträgt und
- das Verhältnis (vd1(t2)/va1(t2)) zwischen der zweiten Dosierwalzengeschwindigkeit (vd1(t2)) und der zweiten Auftragswalzengeschwindigkeit (va1(t2)) 10 % bis 30 % beträgt.

2. Verfahren nach Anspruch 1, wobei
- das Verhältnis (vd1(t1)/va1(t1)) zwischen der ersten Dosierwalzengeschwindigkeit (vd1(t1)) und der ersten Auftragswalzengeschwindigkeit (va1(t1)) einen ersten Wert (r1) aufweist und
- das Verhältnis (vd1(t2)/va1(t2)) zwischen der zweiten Dosierwalzengeschwindigkeit (vd1(t2)) und der zweiten Auftragswalzengeschwindigkeit (va1(t2)) einen zweiten Wert (r2) aufweist, wobei
- die Differenz zwischen dem zweiten Wert (r2) und dem ersten Wert (r1) mindestens 3 Prozenteinheiten beträgt.

3. Verfahren nach irgendeinem von Anspruch 1 oder 2, wobei
- vor dem Auftrag des Klebstoffs (330) das erste Holzfurnier (101, 101a, 101b) eine Dicke (tᵥ) aufweist und
- die Breite (w_{g}) des Auftragsspalts (215) in der Richtung der Dicke (tᵥ) während des Auftrags des Klebstoffs (330) 0,05 mm bis 0,5 mm weniger als die Dicke (tᵥ) beträgt und das Verfahren Folgendes umfasst:
- Zuführen des ersten Holzfurniers (101, 101a, 101b) durch den Auftragsspalt (215) mit einer Geschwindigkeit (v), die der Umfangsgeschwindigkeit der primären Auftragswalze (va1(t1), va1(t2)) gleicht;
vorzugsweise
- die Dicke (tᵥ) des ersten Holzfurniers (101, 101a, 101b) 1 mm bis 4 mm beträgt.

4. Verfahren nach irgendeinem der Ansprüche 1 bis 3, wobei
- das erste Holzfurnier (101, 101a, 101b) Fasern (130) mit einer Faserrichtung (132) umfasst, wobei das Verfahren Folgendes umfasst:
- Zuführen des ersten Holzfurniers (101, 101a, 101b) durch den Auftragsspalt (215) in einer Zuführrichtung (fd), die im Wesentlichen parallel zur Faserrichtung (132) ist.

5. Verfahren nach irgendeinem der Ansprüche 1 bis 4, wobei
- der Klebstoff (330) eine Viskosität von 15 s bis 45 s bei Messung nach der Norm ISO 2431:2011 unter Verwendung eines Auslaufbechers mit einem Öffnungsdurchmesser von 6 mm aufweist und/oder
- die erste Auftragswalzengeschwindigkeit (va1(t1)) 50 m/s bis 500 m/s beträgt und/oder
- das Verfahren das Auftragen von 120 g/m² bis 200 g/m² Klebstoff (330) auf mindestens die primäre Oberfläche (111), vorzugsweise auch auf die sekundäre Oberfläche (121), des ersten Holzfurniers (101) umfasst und/oder
- der Klebstoff (330) mindestens eines von Phenolharz, Phenol-Formaldehyd, Harnstoff-Melamin, Melamin-Formaldehyd, Resorcinol und einem ligninbasiertem Klebstoff ist.

6. Verfahren nach irgendeinem der Ansprüche 1 bis 5, umfassend
- Feststellen, dass eine Qualität des ersten Holzfurniers (101, 101a, 101b) nicht einen Grenzwert überschreitet,
- Feststellen, dass eine Qualität eines zweiten Holzfurniers (102a, 102b) den Grenzwert überschreitet, und
- Stapeln des ersten Holzfurniers (101, 101a, 101b) und des zweiten Holzfurniers (102a, 102b) aufeinander, um einen Teil einer Holzlaminatplatte (100) derart zu bilden, dass
- das zweite Holzfurnier (102a, 102b) eine Hauptoberfläche (110) der Holzlaminatplatte (100) umfasst, wobei die Flächennormale (Nₛₚ) der Hauptoberfläche (110) der Holzlaminatplatte (100) parallel zur Dicke (tₚ) der Holzlaminatplatte (100) ist, und
- der Klebstoff (330) nicht mit der Walzenauftragsmaschine (500) auf die Hauptoberfläche (110) der Holzlaminatplatte (100) aufgetragen wird.

7. Verfahren nach Anspruch 6, umfassend
- Feststellen, dass eine Qualität eines dritten Holzfurniers (103) schlechter als die Qualität des ersten Holzfurniers (101, 101a, 101b) ist, wobei das Verfahren ferner Folgendes umfasst:
- Stapeln des ersten Holzfurniers (101, 101a, 101b), des zweiten Holzfurniers (102a, 102b) und des dritten Holzfurniers (103) aufeinander derart, dass
- das erste Holzfurnier (101, 101a, 101b) zwischen dem dritten Holzfurnier (101) und dem zweiten Holzfurnier (102a, 102b) angeordnet ist, wobei
- der Klebstoff (330) nicht mit der Walzenauftragsmaschine (500) auf eine Oberfläche des dritten Holzfurniers (103) aufgetragen wird.

8. Walzenauftragsmaschine (500), geeignet zum Auftragen von Klebstoff (330) auf ein Holzfurnier (101, 101a, 101b), wobei die Walzenauftragsmaschine (500) Folgendes umfasst:
- eine primäre Auftragswalze (210),
- eine sekundäre Auftragswalze (220), die im Wesentlichen parallel zu der primären Auftragswalze (210) derart angeordnet ist, dass ein Auftragsspalt (215) zwischen der primären Auftragswalze (210) und der sekundären Auftragswalze (220) verbleibt,
- eine primäre Dosierwalze (230), die Wesentlichen parallel zu der primären Auftragswalze (210) angeordnet ist, wodurch ein primärer Zuführspalt (g₁) zwischen der primären Dosierwalze (230) und der primären Auftragswalze (210) verbleibt, wobei eine Breite des primären Zuführspalts (g₁) höchstens 0,2 mm beträgt, und
- eine sekundäre Dosierwalze (240), die Wesentlichen parallel zu der sekundären Auftragswalze (220) angeordnet ist, wodurch ein sekundärer Zuführspalt (g₂) zwischen der sekundären Dosierwalze (240) und der sekundären Auftragswalze (220) verbleibt, wobei eine Breite des sekundären Zuführspalts (g₂) höchstens 0,2 mm beträgt,
- Mittel (311, 312) zum Führen des Klebstoffs (330) in einen durch die primäre Auftragswalze (210) und die primäre Dosierwalze (230) definierten primären Raum (301), wobei der Klebstoff (330) dafür konfiguriert ist, vom primären Raum (301) durch den primären Zuführspalt (g₁) auf die primäre Auftragswalze (210) zu fließen,
- Mittel (321, 322) zum Führen des Klebstoffs (330) in einen durch die sekundäre Auftragswalze (220) und die sekundäre Dosierwalze (340) definierten sekundären Raum (302), wobei der Klebstoff (330) dafür konfiguriert ist, vom sekundären Raum (302) durch den sekundären Zuführspalt (g₂) auf die sekundäre Auftragswalze (220) zu fließen,
- ein Mittel (611) zum Drehen der primären Auftragswalze (210),
- ein Mittel (631) zum Drehen der primären Dosierwalze (230) und
- eine Steuereinheit (CPU1), die dafür konfiguriert ist,
∘ an einem ersten Zeitpunkt (t1)
• die primäre Auftragswalze (210) mit einer ersten Auftragswalzengeschwindigkeit (va1(t1)) zu drehen, die der Umfangsgeschwindigkeit der primären Auftragswalze (210) am ersten Zeitpunkt (t1) gleicht, und
• die primäre Dosierwalze (230) mit einer ersten Dosierwalzengeschwindigkeit (vd1(t1)) zu drehen, die der Umfangsgeschwindigkeit der primären Dosierwalze (230) am ersten Zeitpunkt (t1) gleicht, und
∘ nach dem ersten Zeitpunkt (t1) ein Signal (S1) zu empfangen, das eine Notwendigkeit zur Änderung der aufzutragenden Klebstoffmenge angibt, und
∘ als Reaktion auf das Signal (S1) an einem zweiten Zeitpunkt (t2)
• die primäre Auftragswalze (210) mit einer zweiten Auftragswalzengeschwindigkeit (va1(t2)) zu drehen, die der Umfangsgeschwindigkeit der primären Auftragswalze (210) am zweiten Zeitpunkt (t2) gleicht, und
• die primäre Dosierwalze (230) mit einer zweiten Dosierwalzengeschwindigkeit (vd1 (t2)) zu drehen, die der Umfangsgeschwindigkeit der primären Dosierwalze (230) am zweiten Zeitpunkt (t2) gleicht, wobei
- das Verhältnis (vd1(t1)/va1(t1)) zwischen der ersten Dosierwalzengeschwindigkeit (vd1(t1)) und der ersten Auftragswalzengeschwindigkeit (va1(t1)) vom Verhältnis (vd1(t2)/va1(t2)) zwischen der zweiten Dosierwalzengeschwindigkeit (vd1(t2)) und der zweiten Auftragswalzengeschwindigkeit (va1(t2)) verschieden ist,
**dadurch gekennzeichnet, dass**
- die Steuereinheit (CPU1) dafür konfiguriert ist, die primäre Dosierwalze (230) und die primäre Auftragswalze (210) unter Verwendung des Mittels (611) zum Drehen der primären Auftragswalze (210) und des Mittels (631) zum Drehen der primären Dosierwalze (230) derart zu drehen, dass nahe dem primären Zuführspalt (g₁) der Umfang der primären Dosierwalze (230) sich in derselben Richtung wie der Umfang der primären Auftragswalze (210) bewegt, wobei
- das Verhältnis (vd1(t1)/va1(t1)) zwischen der ersten Dosierwalzengeschwindigkeit (vd1(t1)) und der ersten Auftragswalzengeschwindigkeit (va1(t1)) 10 % bis 30 % beträgt und
- das Verhältnis (vd1(t2)/va1(t2)) zwischen der zweiten Dosierwalzengeschwindigkeit (vd1(t2)) und der zweiten Auftragswalzengeschwindigkeit (va1(t2)) 10 % bis 30 % beträgt.

9. Walzenauftragsmaschine (500) nach Anspruch 8, wobei die Steuereinheit (CPU1) dafür konfiguriert ist, die primäre Dosierwalze (230) und die primäre Auftragswalze (210) unter Verwendung des Mittels (611) zum Drehen der primären Auftragswalze (210) und des Mittels (631) zum Drehen der primären Dosierwalze (230) derart zu drehen, dass
- das Verhältnis (vd1(t1)/va1(t1)) zwischen der ersten Dosierwalzengeschwindigkeit (vd1(t1)) und der ersten Auftragswalzengeschwindigkeit (va1(t1)) einen ersten Wert (r1) aufweist und
- das Verhältnis (vd1(t2)/va1(t2)) zwischen der zweiten Dosierwalzengeschwindigkeit (vd1(t2)) und der zweiten Auftragswalzengeschwindigkeit (va1(t2)) einen zweiten Wert (r2) aufweist, wobei
- die Differenz zwischen dem zweiten Wert (r2) und dem ersten Wert (r1) mindestens 3 Prozenteinheiten beträgt.

10. Walzenauftragsmaschine (500) nach Anspruch 8 oder 9, wobei
- eine Breite des Auftragsspalts (215) höchstens 4 mm beträgt.

11. Anordnung (510) umfassend
- die Walzenauftragsmaschine (500) nach irgendeinem der Ansprüche 8 bis 10,
- einen ersten Durchlass (P1) und einen zweiten Durchlass (P2), wobei der erste Durchlass (P1) mit der Walzenauftragsmaschine (500) verbunden ist und der zweite Durchlass (P2) dafür konfiguriert ist, die Walzenauftragsmaschine (500) zu umgehen,
- einen Detektor (400), der dafür konfiguriert ist, eine Information zu erfassen, die eine Qualität einzelner Holzfurniere (101, 101, 101b, 102a, 102b, 103) angibt,
- eine Leitvorrichtung (410), die dafür konfiguriert ist, das mindestens eine Holzfurnier zum ersten Durchlass (P1) und mindestens ein Holzfurnier zum zweiten Durchlass (P2) zu leiten, wobei
- die Steuereinheit (CPU1) oder eine andere Steuereinheit (CPU2) dafür konfiguriert ist, die Qualität der einzelnen Furniere unter Verwendung der Information, die eine Qualität der einzelnen Holzfurniere angibt, zu ermitteln, und
- die Steuereinheit (CPU1) oder eine andere Steuereinheit (CPU2) dafür konfiguriert ist, durch Verwendung der Leitvorrichtung (410)
∘ Holzfurniere (102a, 102b), deren Qualität einen Grenzwert überschreitet, zum zweiten Durchlass (P2) zu leiten und
∘ die anderen Holzfurniere (101, 101a, 101b, 103) zum ersten Durchlass (P1) zu leiten, wodurch
- der Klebstoff (330) nicht durch die Walzenauftragsmaschine (500) an den zum zweiten Durchlass (P2) geleiteten Holzfurnieren (102a, 102b) aufgetragen wird und
- der Klebstoff (330) durch die Walzenauftragsmaschine (500) an zumindest einigen der zum ersten Durchlass (P1) geleiteten Holzfurniere (101, 101a, 101b, 103) aufgetragen wird.

12. Verfahren, Walzenauftragsmaschine (500) oder Anordnung (510) nach irgendeinem der vorangehenden Ansprüche, wobei
- die Walzenauftragsmaschine (500) Mittel (234, 235) zum Einstellen einer Breite des primären Zuführspalts (g₁) umfasst;
vorzugsweise
- das Verfahren das Einstellen der Breite des primären Zuführspalts (g₁) umfasst.

13. Verfahren, Walzenauftragsmaschine (500) oder Anordnung (510) nach irgendeinem der vorangehenden Ansprüche, wobei
- die Härte der primären Auftragswalze (210) 60 bis 75 Sh (A) beträgt, vorzugsweise
- die Härte der sekundären Auftragswalze (220) 60 bis 75 Sh (A) beträgt, bevorzugter
- die Härte der sekundären Auftragswalze (220) der Härte der primären Auftragswalze (210) gleicht.

14. Verfahren, Walzenauftragsmaschine (500) oder Anordnung (510) nach irgendeinem der vorangehenden Ansprüche, wobei
- die primäre Auftragswalze (210) eine erste primäre Vertiefung (215) und eine zweite primäre Vertiefung (216) definiert, wobei
- ein Abstand (dᵣ) zwischen der ersten primären Vertiefung (215) und der zweiten primären Vertiefung (216) 0,5 mm bis 3 mm beträgt,
- eine Breite (wᵣ) der ersten primären Vertiefung (215) 0,3 mm bis 1,5 mm beträgt,
- eine Breite der zweiten primären Vertiefung (216) 0,3 mm bis 1,5 mm beträgt,
- die Tiefe (hᵣ) der ersten primären Vertiefung (215) 0,3 mm bis 1 mm beträgt und
- die Tiefe der zweiten primären Vertiefung 0,3 mm bis 1 mm beträgt;
vorzugsweise
- die sekundäre Auftragswalze (220) eine erste sekundäre Vertiefung und eine zweite sekundäre Vertiefung definiert, wobei
- ein Abstand zwischen der ersten sekundären Vertiefung und der zweiten sekundären Vertiefung 0,5 mm bis 3 mm beträgt,
- eine Breite der ersten sekundären Vertiefung 0,3 mm bis 1,5 mm beträgt,
- eine Breite der zweiten sekundären Vertiefung 0,3 mm bis 1,5 mm beträgt,
- die Tiefe der ersten sekundären Vertiefung 0,3 mm bis 1 mm beträgt und
- die Tiefe der zweiten sekundären Vertiefung 0,3 mm bis 1 mm beträgt.

## Revendications

1. Procédé pour l'application d'un adhésif (330) sur au moins un premier placage en bois (101, 101a, 101b), en utilisant un rouleau d'enduction (500), le rouleau d'enduction (500) comprenant
- un rouleau d'application primaire (210),
- un rouleau d'application secondaire (220) sensiblement parallèle au rouleau d'application primaire (210) de sorte qu'un intervalle d'application (215) soit laissé entre le rouleau d'application primaire (210) et le rouleau d'application secondaire (220),
- un rouleau racleur primaire (230) sensiblement parallèle au rouleau d'application primaire (210), moyennant quoi un intervalle d'alimentation primaire (g₁) est laissé entre le rouleau racleur primaire (230) et le rouleau d'application primaire (210), une largeur de l'intervalle d'alimentation primaire (g1) étant au plus de 0,2 mm, et
- un rouleau racleur secondaire (240) sensiblement parallèle au rouleau d'application secondaire (220), moyennant quoi un intervalle d'alimentation secondaire (g₂) est laissé entre le rouleau racleur secondaire (240) et le rouleau d'application secondaire (220), une largeur de l'intervalle d'alimentation secondaire (g₂) étant au plus de 0,2 mm ; le procédé comprenant :
- l'alimentation de l'adhésif (330) à travers l'intervalle d'alimentation primaire (g₁) sur le rouleau d'application primaire (210),
- l'alimentation de l'adhésif (330) à travers l'intervalle d'alimentation secondaire (g₂) sur le rouleau d'application secondaire (220) et
- l'alimentation du premier placage en bois (101, 101a, 101b) à travers l'intervalle d'application (215) tout en faisant tourner le rouleau d'application primaire (210) et le rouleau d'application secondaire (220), moyennant quoi le rouleau d'application primaire (210) applique un adhésif (330) sur une surface primaire (111) du premier placage en bois, et le rouleau d'application secondaire (220) applique un adhésif (330) sur une surface secondaire (121) du premier placage en bois (101),
le procédé comprenant
- en un premier temps (t1)
• la rotation du rouleau d'application primaire (210) avec une première vitesse de rouleau d'application (va1(t1)) égale à la vitesse périphérique du rouleau d'application primaire (210) au premier temps (t1) et
• la rotation du rouleau racleur primaire (230) avec une première vitesse de rouleau racleur (vd1(t1)) égale à la vitesse périphérique du rouleau racleur primaire (230) au premier temps (t1), et
- en un deuxième temps (t2)
• la rotation du rouleau d'application primaire (210) avec une seconde vitesse de rouleau d'application (va1(t2)) égale à la vitesse périphérique du rouleau d'application primaire (210) au deuxième temps (t2), et
• la rotation du rouleau racleur primaire (230) avec une seconde vitesse du rouleau racleur (vd1(t2)) égale à la vitesse périphérique du rouleau racleur primaire (230) au deuxième temps (t2) dans lequel
- le rapport (vd1(t1)/va1(t1)) de la première vitesse de rouleau racleur (vd1 (t1)) sur la première vitesse de rouleau d'application (va1 (t1)) est différent du rapport (vd1(t2)/va1(t2)) de la seconde vitesse de rouleau racleur (vd1(t2)) sur la seconde vitesse de rouleau d'application (va1(t2)),
**caractérisé par**
- la rotation du rouleau racleur primaire (230) et du rouleau d'application primaire (210) de sorte que, à une proximité de l'intervalle d'alimentation primaire (g₁), la périphérie du rouleau racleur primaire (230) se déplace dans la même direction que la périphérie du rouleau d'application primaire (210), dans lequel
- le rapport (vd1(t1)/va1(t1)) de la première vitesse de rouleau racleur (vd1(t1)) sur la première vitesse de rouleau d'application (va1(t1)) est compris entre 10% et 30% ; et
- le rapport (vd1(t2).(va1(t2)) de la seconde vitesse de rouleau racleur (vd1(t2)) sur la seconde vitesse de rouleau d'application (va1(t2)) est compris entre 10 % et 30 %.

2. Procédé selon la revendication 1, dans lequel
- le rapport (vd1(t1)/va1(t1)) de la première vitesse de rouleau racleur (vd1(t1)) sur la première vitesse du rouleau d'application (va1(t1)) a une première valeur (r1) et
- le rapport (vd1(t2)/va1(t2)) de la seconde vitesse du rouleau racleur (vd1(t2)) sur la seconde vitesse de rouleau d'application (va1(t2)) a une seconde valeur (r2), dans lequel
- la différence entre la seconde valeur (r2) et la première valeur (r1) est d'au moins 3 unités en pourcentage.

3. Procédé selon l'une quelconque des revendications 1 ou 2, dans lequel
- avant l'application de l'adhésif (330), le premier placage en bois (101, 101a, 101b) a une épaisseur (tᵥ) et
- la largeur (w_{g}) de l'intervalle d'application (215) dans le sens de l'épaisseur (tᵥ) pendant l'application de l'adhésif (330) est comprise entre 0,05 mm et 0,5 mm de moins que l'épaisseur (tᵥ) et le procédé comprend
- l'alimentation du premier placage en bois (101, 101a, 101b) à travers l'intervalle d'application (215) à une vitesse (v) qui est égale à la vitesse périphérique du rouleau d'application primaire (va1(t1), va1(t2)) ;
de préférence
- l'épaisseur (tᵥ) du premier placage en bois (101, 101a, 101b) est comprise entre 1 mm et 4 mm.

4. Procédé selon l'une quelconque des revendications 1 à 3, dans lequel
- le premier placage en bois (101, 101a, 101b) comprend des grains (130) présentant une direction du grain (132), le procédé comprenant
- l'alimentation du premier placage en bois (101, 101a, 101b) à travers l'intervalle d'application (215) dans une direction d'alimentation (fd) qui est sensiblement parallèle à la direction du grain (132).

5. Procédé selon l'une quelconque des revendications 1 à 4 dans lequel
- l'adhésif (330) a une viscosité comprise entre 15 s et 45 s, telle que mesurée selon la norme ISO 2431:2011 en utilisant un godet de débit présentant un diamètre d'orifice de 6 mm et/ou
- une première vitesse du rouleau d'application (va1(t1)) est comprise entre 50 m/s et 500 m/s et/ou
- le procédé comprend l'application de 120 g/m² à 200 g/m² d'adhésif (330) sur au moins la surface primaire (111), de préférence également sur la surface secondaire (121) du premier placage en bois (101) et/ou
- l'adhésif (330) comprend au moins un de résine phénolique, phénol-formaldéhyde, urée-mélamine, mélamine-formaldéhyde, résorcinol et un adhésif à base de lignine.

6. Procédé selon l'une quelconque des revendications 1 à 5, comprenant
- la détermination qu'une qualité du premier placage en bois (101, 101a, 101b) ne dépasse pas une limite,
- la détermination qu'une qualité d'un second placage en bois (102a, 102b) dépasse la limite, et
- l'empilement du premier placage en bois (101, 101a, 101b) et du second placage en bois (102a, 102b) l'un sur l'autre pour former une partie d'un panneau stratifié en bois (100) de sorte que
- le second placage en bois (102a, 102b) comprend une surface principale (110) du panneau stratifié en bois (100), dans lequel la surface perpendiculaire (Nₛₚ) de la surface principale (110) du panneau stratifié en bois (100) est parallèle à l'épaisseur (tₚ) du panneau stratifié en bois (100), et
- l'adhésif (330) n'est pas appliqué sur la surface principale (110) du panneau stratifié en bois (100) avec le rouleau d'enduction (500).

7. Procédé selon la revendication 6, comprenant
- la détermination qu'une qualité d'un troisième placage en bois (103) est inférieure à la qualité du premier placage en bois (101, 101a, 101b), le procédé comprenant en outre
- l'empilement du premier placage en bois (101, 101a, 101b), du second placage en bois (102a, 102b) et du troisième placage en bois (103) les uns sur les autres de sorte que
- le premier placage en bois (101, 101a, 101b) soit disposé entre le troisième placage en bois (101) et le second placage en bois (102a, 102b), dans lequel
- l'adhésif (330) n'est pas appliqué sur une surface du troisième placage en bois (103) avec le rouleau d'enduction (500).

8. Rouleau d'enduction (500) adapté pour appliquer un adhésif (330) sur un placage en bois (101, 101a, 101b), le rouleau d'enduction (500) comprenant
- un rouleau d'application primaire (210),
- un rouleau d'application secondaire (220) sensiblement parallèle au rouleau d'application primaire (210) de sorte qu'un intervalle d'application (215) soit laissé entre le rouleau d'application primaire (210) et le rouleau d'application secondaire (220),
- un rouleau racleur primaire (230) sensiblement parallèle au rouleau d'application primaire (210), moyennant quoi un intervalle d'alimentation primaire (g₁) est laissé entre le rouleau racleur primaire (230) et le rouleau d'application primaire (210), une largeur de l'intervalle d'alimentation primaire (g₁) étant d'au plus 0,2 mm,
- un rouleau racleur secondaire (240) sensiblement parallèle au rouleau d'application secondaire (220), moyennant quoi un intervalle d'alimentation secondaire (g₂) est laissé entre le rouleau racleur secondaire (240) et le rouleau d'application secondaire (220), une largeur de l'intervalle d'alimentation secondaire (g₂) étant d'au plus 0,2 mm,
- un moyen (311, 312) pour alimenter l'adhésif (330) dans un espace primaire (301) défini par le rouleau d'application primaire (210) et le rouleau racleur primaire (230), dans lequel l'adhésif (330) est configuré pour s'écouler depuis l'espace primaire (301) à travers l'intervalle d'alimentation primaire (g₁) sur le rouleau d'application primaire (210),
- un moyen (321, 322) pour alimenter l'adhésif (330) dans un espace secondaire (302) défini par le rouleau d'application secondaire (220) et le rouleau racleur secondaire (340), dans lequel l'adhésif (330) est configuré pour s'écouler depuis l'espace secondaire (302) à travers l'intervalle d'alimentation secondaire (g₂) sur le rouleau d'application secondaire (220),
- un moyen (611) pour faire tourner le rouleau d'application primaire (210),
- un moyen (631) pour faire tourner le rouleau racleur primaire (230) et
- une unité de commande (CPU1) configurée pour
∘ à un premier temps (t1)
• faire tourner le rouleau d'application primaire (210) à une première vitesse de rouleau d'application (va1(t1)) égale à la vitesse périphérique du rouleau d'application primaire (210) au premier temps (t1) et
• faire tourner le rouleau racleur primaire (230) à une première vitesse de rouleau racleur (vd1(t1)) égale à la vitesse périphérique du rouleau racleur primaire (230) au premier temps (t1), et
∘ après le premier temps (t1), recevoir un signal (S1) indicatif d'un besoin de changer la quantité d'adhésif à appliquer, et
∘ en réponse au signal (S1), en un second temps (t2)
• faire tourner le rouleau d'application primaire (210) à une seconde vitesse du rouleau d'application (va1(t2)) égale à la vitesse périphérique du rouleau d'application primaire (210) au second temps (t2) et
• faire tourner le rouleau racleur primaire (230) à une seconde vitesse du rouleau racleur (vd1(t2)) égale à la vitesse périphérique du rouleau racleur primaire (230) au second temps (t2), dans lequel
- le rapport (vd1(t1)/va1(t1)) de la première vitesse du rouleau racleur (vd1(t1)) sur la première vitesse du rouleau d'application (va1(t1)) est différent du rapport (vd1(t2)/va1(t2)) de la seconde vitesse du rouleau racleur (vd1(t2)) sur la seconde vitesse du rouleau d'application (va1(t2)),
**caractérisé en ce que**
- l'unité de commande (CPU1) est configurée pour faire tourner le rouleau racleur primaire (230) et le rouleau d'application primaire (210) en utilisant le moyen (611) pour faire tourner le rouleau d'application primaire (210) et le moyen (631) pour faire tourner le rouleau racleur primaire (230) de sorte que, à une proximité de l'intervalle d'alimentation primaire (g₁), la périphérie du rouleau racleur primaire (230) se déplace dans la même direction que la périphérie du rouleau d'application primaire (210) dans lequel
- le rapport (vd1(t1)/va1(t1)) de la première vitesse du rouleau racleur (vd1(t1)) sur la première vitesse du rouleau d'application (va1(t1)) est compris entre 10 % et 30 % et
- le rapport (vd1(t2)/va1(t2)) de la seconde vitesse du rouleau racleur (vd1(t2)) sur la seconde vitesse du rouleau d'application (va1(t2)) est compris entre 10 % et 30 %.

9. Rouleau d'enduction (500) selon la revendication 8, dans lequel l'unité de commande (CPU1) est configurée pour faire tourner le rouleau racleur primaire (230) et le rouleau d'application primaire (210) en utilisant le moyen (611) pour faire tourner le rouleau d'application primaire (210) et le moyen (631) pour faire tourner le rouleau racleur primaire (230) de sorte que
- le rapport (vd1(t1)/va1(t1)) de la première vitesse du rouleau racleur (vd1(t1)) sur la première vitesse du rouleau d'application (va1(t1)) a une première valeur (r1) et
- le rapport (vd1(t2)/va1(t2)) de la seconde vitesse du rouleau racleur (vd1(t2)) sur la seconde vitesse du rouleau d'application (va1(t2)) a une seconde valeur (r2), dans lequel
- la différence entre la seconde valeur (r2) et la première valeur (r1) est d'au moins 3 unités en pourcentage.

10. Rouleau d'enduction (500) selon la revendication 8 ou 9, dans lequel
- une largeur de l'intervalle d'application (215) est d'au plus 4 mm.

11. Agencement (510) comprenant :
- le rouleau d'enduction (500) selon l'une quelconque des revendications 8 à 10,
- un premier passage (P1) et un second passage (P2), dans lequel le premier passage (P1) est relié au rouleau d'enduction (500) et le second passage (P2) est configuré pour contourner le rouleau d'enduction (500),
- un détecteur (400) configuré pour détecter des informations indicatives d'une qualité des placages en bois individuels (101, 101, 101b, 102a, 103),
- un dispositif de guidage (410) configuré pour guider ledit au moins un placage en bois vers le premier passage (P1) et au moins un placage en bois vers le second passage (P2), dans lequel
- l'unité de commande (CPU1) ou une autre unité de commande (CPU2) est configurée pour déterminer la qualité des placages individuels en utilisant les informations indicatives d'une qualité des placages en bois individuels, et
- l'unité de commande (CPU1) ou une autre unité de commande (CPU2) est configurée pour, en utilisant le dispositif de guidage (410),
∘ guider des placages en bois (102a, 102b) dont la qualité dépasse une limite vers le second passage (P2) et
∘ guider les autres placages en bois (101, 101a, 101b, 103) vers le premier passage (P1), moyennant quoi
- l'adhésif (330) n'est pas appliqué aux placages en bois (102a, 102b) guidés vers le second passage (P2) par le rouleau d'enduction (500) et
- l'adhésif (330) est appliqué par le rouleau d'enduction (500) à au moins certains des placages en bois (101, 101a, 101b, 103) guidés vers le premier passage (P1).

12. Procédé, rouleau d'enduction (500) ou agencement (510) selon l'une quelconque des revendications précédentes, dans lequel
- le rouleau d'enduction (500) comprend un moyen (234, 235) pour ajuster une largeur de l'intervalle d'alimentation primaire (g₁) ;
de préférence,
- le procédé comprend l'ajustement de la largeur de l'intervalle d'alimentation primaire (g₁).

13. Procédé, rouleau d'enduction (500) ou agencement (510) selon l'une quelconque des revendications précédentes, dans lequel
- la dureté du rouleau d'application primaire (210) est comprise entre 60 et 75 Sh(A), de préférence
- la dureté du rouleau d'application secondaire (220) est comprise entre 60 et 75 Sh(A), de manière davantage préférée
- la dureté du rouleau d'application secondaire (220) est égale à la dureté du rouleau d'application primaire (210).

14. Procédé, rouleau d'enduction (500) ou agencement (510) selon l'une quelconque des revendications précédentes, dans lequel
- le rouleau d'application primaire (210) définit une première dépression primaire (215) et une seconde dépression primaire (216), dans lequel
- une distance (dᵣ) entre la première dépression primaire (215) et la seconde dépression primaire (216) est comprise entre 0,5 mm et 3 mm ;
- une largeur (wᵣ) de la première dépression primaire (215) est comprise entre 0,3 mm et 1,5 mm,
- une largeur de la seconde dépression primaire (216) est comprise entre 0,3 mm et 1,5 mm,
- la profondeur (hᵣ) de la première dépression primaire (215) est comprise entre 0,3 mm et 1 mm et
- la profondeur de la seconde dépression primaire est comprise entre 0,3 mm et 1 mm ;
de préférence
- le rouleau d'application secondaire (220) définit une première dépression secondaire et une seconde dépression secondaire, dans lequel
- une distance entre la première dépression secondaire et la seconde dépression secondaire est comprise entre 0,5 mm et 3 mm,
- une largeur de la première dépression secondaire est comprise entre 0,3 mm et 1,5 mm,
- une largeur de la seconde dépression secondaire est comprise entre 0,3 mm et 1,5 mm,
- la profondeur de la première dépression secondaire est comprise entre 0,3 mm et 1 mm, et
- la profondeur de la seconde dépression secondaire est comprise entre 0,3 mm et 1 mm.
